# EUROPEAN PATENT APPLICATION

(11) **EP 4 621 549 A1**
(43) Date of publication of application: **24.09.2025**
(21) Application number: 23896366.4
(22) Date of filing: 30.10.2023
(51) Int. Cl.: G06F 3/14

(54) **CROSS-DEVICE FOCUS SWITCHING METHOD, ELECTRONIC DEVICE AND SYSTEM**

(30) Priority: 28.11.2022 CN 202211502689
(71) Applicant: Huawei Technologies Co., Ltd., Shenzhen, Guangdong 518129 (CN)
(72) Inventor: HU, Liang, Shenzhen, Guangdong 518129 (CN); XU, Jie, Shenzhen, Guangdong 518129 (CN)
(74) Representative: Gill Jennings & Every LLP
(86) International application number: PCT/CN2023/127572
(87) International publication number: WO 2024/114212

(57) **Abstract**

Embodiments of this application provide a cross-device focus switching method, a device, and a system. The method is applied to a system including two devices and an input device. The input device is connected to one of the devices, and the two devices are connected to a same account and/or the same account is logged in to the two devices. The method includes: When a focus of the input device is on the device connected to the input device, a user gazes at the other device, and the other device displays an input box, the device sends indication information to the other device; and after receiving the indication information, the other device displays the focus of the input device in the input box of the other device or outputs prompt information. In this way, the user can directly input information on the other device through the input device, or the user can switch the focus of the input device to the input box of the other device based on the prompt information. Further, this helps improve user experience when the user switches the focus of the input device.

## Description

This application claims priority to Chinese Patent Application No. 202211502689.9, filed with the China National Intellectual Property Administration on November 28, 2022 and entitled "CROSS-DEVICE FOCUS SWITCHING METHOD, ELECTRONIC DEVICE, AND SYSTEM", which is incorporated herein by reference in its entirety.

### TECHNICAL FIELD

Embodiments of this application relate to the terminal field, and more specifically, to a cross-device focus switching method, an electronic device, and a system.

### BACKGROUND

In daily life or work, a user uses various electronic devices. In a process of using an electronic device by the user, information on the electronic device may be input through an input device.

However, if the user wants to use a plurality of electronic devices through the input device, the user needs to manually disconnect a connection relationship between one electronic device and the input device, and establish a connection between the input device and another electronic device. Alternatively, the user needs to manually switch a connection switching button on the input device, to use another electronic device through the input device. In this way, operations of the user are complex, and consequently user experience is poor.

### SUMMARY

Embodiments of this application provide a cross-device focus switching method, an electronic device, and a system. The method helps improve user experience when a user switches a focus of an input device.

According to a first aspect, a system is provided. The system includes an input device, a first electronic device, and a second electronic device, the input device is connected to the first electronic device, a focus of the input device is on the first electronic device, the first electronic device is connected to the second electronic device, and/or a same account is logged in to the first electronic device and the second electronic device; the first electronic device is configured to: when an area at which a user gazes belongs to an area in which the second electronic device is located, and a first input box is displayed on the second electronic device, send first indication information to the second electronic device; and the second electronic device is configured to: after receiving the first indication information, display the focus of the input device in the first input box, or output first prompt information, where the first prompt information indicates that the user can switch the focus of the input device to the first input box.

The user previously inputs the information on the first electronic device through the input device, that is, the focus of the input device is on the first electronic device. If the user wants to input the information in the input box of the second electronic device through the input device, the user may move a line of sight to the second electronic device. In this way, when the line of sight of the user is on the second electronic device and the input box is displayed on the second electronic device, the first indication information may be sent to the second electronic device. Then, after receiving the first indication information, the second electronic device displays the focus of the input device in the first input box. In this case, the focus of the input device is switched from the first electronic device to the first input box of the second electronic device. Alternatively, after receiving first confirmation information, the second electronic device outputs the first prompt information, to prompt the user that the focus of the input device can be switched. Further, the user may switch, based on the first prompt information, the focus of the input device to the input box of the second electronic device on which the line of sight of the user is located. In this way, the user can switch the focus of the input device from the first electronic device to the second electronic device in a cross-device manner by performing a simple operation. This helps improve user experience when the user switches the focus of the input device.

With reference to the first aspect, in some implementations of the first aspect, the first electronic device is further configured to determine, in the following manner, that the area at which the user gazes belongs to the area in which the second electronic device is located: obtaining an image of the user; determining a line of sight of the user based on the image of the user; and when there is an intersection point between the line of sight of the user and an extension surface, along a first direction, of the first electronic device, and the second electronic device is located in the first direction of the first electronic device, determining that the area at which the user gazes belongs to the area in which the second electronic device is located.

With reference to the first aspect, in some implementations of the first aspect, the first electronic device is further configured to: before obtaining the image of the user, determine that the second electronic device meets a second condition, where the second condition includes at least one of the following: the first input box is displayed on the second electronic device, the second electronic device displays a display interface of a target application, and the first input box is displayed on the second electronic device and the first input box is located at a bottom of the display interface of the second electronic device.

The first electronic device obtains the image of the user only when the second electronic device meets the second condition. In this way, power consumption of the first electronic device can be reduced.

With reference to the first aspect, in some implementations of the first aspect, the target application includes a chat application or a search application.

With reference to the first aspect, in some implementations of the first aspect, the first electronic device is further configured to determine, in the following manner, that the first input box is displayed on the second electronic device: receiving first confirmation information from the second electronic device, where the first confirmation information indicates that the first input box is displayed on the second electronic device; and determining, based on the first confirmation information, that the first input box is displayed on the second electronic device.

With reference to the first aspect, in some implementations of the first aspect, the system switches the focus of the input device to the first input box in the following manner: the input device is further configured to send third switching information to the first electronic device in response to detecting a first operation, where the third switching information indicates to switch the focus of the input device to the first input box; the first electronic device is further configured to: in response to the third switching information, control the first electronic device to be in a state in which the focus of the input device is lost, and send third indication information (second indication information) to the second electronic device; and the second electronic device is further configured to: in response to the third indication information, control the first input box of the second electronic device to be in a state in which the focus of the input device is obtained.

With reference to the first aspect, in some implementations of the first aspect, the first electronic device is further configured to: before controlling the first electronic device to be in the state in which the focus of the input device is lost, display fourth prompt information, where the fourth prompt information indicates that the focus of the input device is on the first electronic device; and after controlling the first electronic device to be in the state in which the focus of the input device is lost, no longer display the fourth prompt information.

With reference to the first aspect, in some implementations of the first aspect, the first prompt information further prompts the user to input the first operation on the input device, so that the focus of the input device can be switched to the first input box.

With reference to the first aspect, in some implementations of the first aspect, the first prompt information is displayed at a first target location, and a distance between the first target location and the first input box is less than or equal to a first threshold.

With reference to the first aspect, in some implementations of the first aspect, when a second input box is further displayed on the second electronic device, the first prompt information is displayed at a second target location, and a distance between the second target location and the second input box is less than or equal to a second threshold; the first electronic device is further configured to send first switching information to the second electronic device; and the second electronic device is further configured to: after receiving the first switching information, adjust a display location of the first prompt information from the second target location to a first target location, where a distance between the first target location and the first input box is less than or equal to a first threshold.

With reference to the first aspect, in some implementations of the first aspect, the input device is further configured to send first switching information to the first electronic device in response to detecting a second operation, where the first switching information indicates to adjust a display location of the first prompt information from a second target location to a first target location; and the first electronic device is further specifically configured to send the first switching information to the second electronic device after receiving the first switching information.

When a plurality of input boxes are displayed on the second electronic device, the user may further switch, through the input device, the focus of the input device to the input box of the second electronic device for adjustment. This helps further improve user experience when the user switches the focus of the input device.

With reference to the first aspect, in some implementations of the first aspect, the second input box is an input box in which a focus latest input by the second electronic device is located; or the second input box is a 1^{st} input box on the display interface of the second electronic device.

With reference to the first aspect, in some implementations of the first aspect, the second electronic device is further configured to: after the focus of the input device is switched to the first input box, display second prompt information, where the second prompt information indicates that the user can input information on the second electronic device through the input device.

With reference to the first aspect, in some implementations of the first aspect, a display location of the second prompt information and the display location of the first prompt information are the same, and display effect of the second prompt information and display effect of the first prompt information are different.

For example, the first prompt information includes a first icon and/or first text information, the first icon indicates the input device, and the first text information indicates the first operation; and the second prompt information includes a second icon and/or second text information, the second icon indicates the input device, and the second text information indicates that the user can input the information in the first input box. Display effect of the second icon and display effect of the first icon are different.

With reference to the first aspect, in some implementations of the first aspect, the display effect of the second prompt information and display effect of the fourth prompt information are the same. With reference to the first aspect, in some implementations of the first aspect, the second electronic device is further configured to: after the focus of the input device is switched to the first input box, display first input information in the first input box, where the first input information is information input by the user through the input device.

With reference to the first aspect, in some implementations of the first aspect, the input device is further configured to send the first input information to the first electronic device in response to obtaining the first input information of the user; the first electronic device is further configured to forward the first input information to the second electronic device in response to the first input information; and the second electronic device is further specifically configured to display the first input information in the first input box in response to the first input information.

With reference to the first aspect, in some implementations of the first aspect, the second electronic device is further configured to: when the second electronic device no longer displays the first input box, control the second electronic device to be in a state in which the focus of the input device is located, and send fourth indication information to the first electronic device, where the fourth indication information indicates that the first electronic device can obtain the focus of the input device; and the first electronic device is further configured to: in response to the second indication information, control the first electronic device to be in a state in which the focus of the input device is obtained.

When the second electronic device no longer displays the first input box, the first electronic device may switch the focus of the input device back to the first electronic device, so that the user can input the information on the first electronic device again through the input device. In this way, the first electronic device can automatically switch the focus of the input device from the second electronic device to the first electronic device in a cross-device manner. This helps further improve user experience when the user switches the focus of the input device.

According to a second aspect, a system is provided. The system includes an input device, a first electronic device, and a second electronic device, the input device is connected to the first electronic device, a focus of the input device is on the first electronic device, the first electronic device is connected to the second electronic device, and/or a same account is logged in to the first electronic device and the second electronic device; the first electronic device is configured to: when a first condition is met, display the focus of the input device on the first electronic device, or output third prompt information, where the third prompt information prompts a user that the focus of the input device can be switched to the first electronic device; and the first condition includes: no input box is displayed on the second electronic device; or an area at which the user gazes belongs to an area in which the first electronic device is located, and an input box is displayed on the second electronic device.

The user previously inputs the information on the second electronic device through the input device, that is, the focus of the input device is on the second electronic device. If the user wants to input the information on the first electronic device through the input device, the user may move a line of sight to the first electronic device, or the user may exit an interface that displays the input box on the second electronic device. In this way, when the line of sight of the user is on the first electronic device and there is the input box on the second electronic device, or when there is no input box on the second electronic device, the first electronic device may display the focus of the input device on the first electronic device. In this case, the focus of the input device is switched from the second electronic device to the first electronic device. Alternatively, when the line of sight of the user is on the first electronic device and there is the input box on the second electronic device, or when there is no input box on the second electronic device, the first electronic device may output the third prompt information. Further, the user may switch, based on the third prompt information, the focus of the input device to the first electronic device on which the line of sight of the user is located. In this way, the user can switch the focus of the input device from the second electronic device to the first electronic device in a cross-device manner by performing a simple operation. This helps improve user experience when the user switches the focus of the input device.

With reference to the second aspect, in some implementations of the second aspect, the first electronic device is further configured to determine, in the following manner, that the area at which the user gazes belongs to the area in which the first electronic device is located: obtaining an image of the user, and determining a line of sight of the user; and when there is an intersection point between the line of sight of the user and the first electronic device, determining that the area at which the user gazes belongs to the area in which the first electronic device is located.

With reference to the second aspect, in some implementations of the second aspect, the first electronic device is further configured to determine, in the following manner, whether the input box is displayed on the second electronic device: receiving second indication information from the second electronic device, where the second indication information indicates whether the input box is displayed on the second electronic device; and determining, based on the second indication information, whether the input box is displayed on the second electronic device.

With reference to the second aspect, in some implementations of the second aspect, the system switches the focus of the input device to the first electronic device in the following manner: the input device is further configured to send fourth switching information to the first electronic device in response to detecting a first operation, where the fourth switching information indicates to switch the focus of the input device to the first electronic device; the first electronic device is further configured to: in response to the fourth switching information, control the first electronic device to be in a state in which the focus of the input device is obtained, and send fifth indication information to the second electronic device; and the second electronic device is further configured to: in response to the fifth indication information, control the second electronic device to be in a state in which the focus of the input device is lost.

With reference to the second aspect, in some implementations of the first aspect, the second electronic device is further configured to: before controlling the second electronic device to be in the state in which the focus of the input device is lost, display second prompt information, where the second prompt information indicates that the user can input information on the second electronic device through the input device; and after controlling the second electronic device to be in the state in which the focus of the input device is lost, no longer display the second prompt information.

With reference to the second aspect, in some implementations of the second aspect, the third prompt information further prompts the user to input the first operation on the input device, so that the focus of the input device can be switched to the first electronic device.

With reference to the second aspect, in some implementations of the second aspect, a third input box is displayed on the first electronic device, and the focus of the input device is displayed in the third input box, or the third prompt information prompts the user that the focus of the input device can be switched to the third input box.

With reference to the second aspect, in some implementations of the second aspect, the third prompt information is displayed at a third target location, and a distance between the third target location and the third input box is less than or equal to a third threshold.

With reference to the second aspect, in some implementations of the second aspect, when a fourth input box is further displayed on the first electronic device, the third prompt information is displayed at a fourth target location, and a distance between the fourth target location and the fourth input box is less than or equal to a fourth threshold; and the first electronic device is further configured to: receive second switching information from the input device; and after the second switching information is received, adjust a display location of the third prompt information from the fourth target location to a third target location, where a distance between the third target location and the third input box is less than or equal to a third threshold.

When a plurality of input boxes are displayed on the first electronic device, the user may further switch, through the input device, the focus of the input device to the input box of the first electronic device for adjustment. This helps further improve user experience when the user switches the focus of the input device.

With reference to the second aspect, in some implementations of the second aspect, the input device is further configured to: before being in response to detecting the first operation, send second switching information to the first electronic device in response to detecting a second operation, where the second switching information indicates to adjust a display location of the third prompt information from a fourth target location to a third target location, and a distance between the third target location and the third input box is less than or equal to a third threshold; and the first electronic device is further specifically configured to adjust the display location of the third prompt information from the fourth target location to the third target location in response to the second switching information.

With reference to the second aspect, in some implementations of the second aspect, the fourth input box is an input box in which a focus latest input by the first electronic device is located; or the fourth input box is a 1^{st} input box on a display interface of the first electronic device.

With reference to the second aspect, in some implementations of the second aspect, the first electronic device is further configured to: after the focus of the input device is switched to the first electronic device, display fourth prompt information, where the fourth prompt information indicates that the user can input information on the first electronic device through the input device.

With reference to the second aspect, in some implementations of the second aspect, a display location of the fourth prompt information and the display location of the third prompt information are the same, and display effect of the fourth prompt information and display effect of the third prompt information are different.

For example, the third prompt information includes a third icon and third text information, the third icon indicates the input device, and the third text information indicates the first operation; and the fourth prompt information includes a fourth icon and/or fourth text information, the fourth icon indicates the input device, and the fourth text information indicates that the user can input the information on the first electronic device. Display effect of the fourth icon and display effect of the third icon are different.

With reference to the second aspect, in some implementations of the second aspect, the display effect of the fourth prompt information and display effect of the second prompt information are the same.

With reference to the second aspect, in some implementations of the second aspect, the first electronic device is further configured to: after the focus of the input device is switched to the first electronic device, display second input information in the third input box, where the second input information is information input by the user through the input device.

With reference to the second aspect, in some implementations of the second aspect, the input device is further configured to send the second input information to the first electronic device in response to obtaining the second input information of the user; and the first electronic device is further specifically configured to display the second input information in the third input box in response to the second input information.

According to a third aspect, a cross-device focus switching method is provided. The method is applied to a second electronic device, the second electronic device is connected to a first electronic device, and/or a same account is logged in to the second electronic device and the first electronic device. There is a focus of an input device on the first electronic device. The method includes: when an area at which a user gazes belongs to an area in which the second electronic device is located, and a first input box is displayed on the second electronic device, receiving first indication information from the first electronic device; and in response to the first indication information, displaying the focus of the input device in the first input box, or outputting first prompt information, where the first prompt information indicates that the user can switch the focus of the input device to the first input box.

With reference to the third aspect, in some implementations of the third aspect, before the receiving first indication information from the first electronic device, the method further includes: sending first confirmation information to the first electronic device, where the first confirmation information indicates that the first input box is displayed on the second electronic device.

With reference to the third aspect, in some implementations of the third aspect, the first prompt information is displayed at a first target location, and a distance between the first target location and the first input box is less than or equal to a first threshold.

With reference to the third aspect, in some implementations of the third aspect, when a second input box is further displayed on the second electronic device, the first prompt information is displayed at a second target location, and a distance between the second target location and the second input box is less than or equal to a second threshold. The method further includes: receiving first switching information from the first electronic device; and in response to the first switching information, adjusting a display location of the first prompt information from the second target location to a first target location, where a distance between the first target location and the first input box is less than or equal to a first threshold.

With reference to the third aspect, in some implementations of the third aspect, the method further includes: after the focus of the input device is switched to the first input box, displaying first input information in the first input box, where the first input information is information input by the user through the input device.

With reference to the third aspect, in some implementations of the third aspect, the method further includes: after the focus of the input device is switched to the first input box, displaying second prompt information, where the second prompt information indicates that the user can input information on the second electronic device through the input device.

With reference to the third aspect, in some implementations of the third aspect, a display location of the second prompt information and the display location of the first prompt information are the same, and display effect of the second prompt information and display effect of the first prompt information are different.

For technical effect of the third aspect and the possible implementations, refer to the related descriptions of the first aspect. Details are not described herein.

According to a fourth aspect, a cross-device focus switching method is provided. The method is applied to a first electronic device, the first electronic device is connected to an input device, the first electronic device is connected to a second electronic device, and/or a same account is logged in to the first electronic device and the second electronic device. A focus of the input device is on the second electronic device. The method includes: when a first condition is met, displaying the focus of the input device on the first electronic device, or outputting third prompt information, where the third prompt information prompts a user that the focus of the input device can be switched to the first electronic device; and the first condition includes: no input box is displayed on the second electronic device; or an area at which the user gazes belongs to an area in which the first electronic device is located, and an input box is displayed on the second electronic device.

With reference to the fourth aspect, in some implementations of the fourth aspect, the first electronic device is further configured to determine, in the following manner, that the area at which the user gazes belongs to the area in which the first electronic device is located: obtaining an image of the user, and determining a line of sight of the user; and when there is an intersection point between the line of sight of the user and the first electronic device, determining that the area at which the user gazes belongs to the area in which the first electronic device is located.

With reference to the fourth aspect, in some implementations of the fourth aspect, whether the input box is displayed on the second electronic device is determined in the following manner: receiving second indication information from the second electronic device, where the second indication information indicates whether the input box is displayed on the second electronic device; and determining, based on the second indication information, whether the input box is displayed on the second electronic device.

With reference to the fourth aspect, in some implementations of the fourth aspect, a third input box is displayed on the first electronic device, and the focus of the input device is displayed in the third input box, or the third prompt information prompts the user that the focus of the input device can be switched to the third input box.

With reference to the fourth aspect, in some implementations of the fourth aspect, the third prompt information is displayed at a third target location, and a distance between the third target location and the third input box is less than or equal to a third threshold.

With reference to the fourth aspect, in some implementations of the fourth aspect, when a fourth input box is further displayed on the first electronic device, the third prompt information is displayed at a fourth target location, and a distance between the fourth target location and the fourth input box is less than or equal to a fourth threshold. The method further includes: receiving second switching information from the input device; and after the second switching information is received, adjusting a display location of the third prompt information from the fourth target location to a third target location, where a distance between the third target location and the third input box is less than or equal to a third threshold.

With reference to the fourth aspect, in some implementations of the fourth aspect, the method further includes: after the focus of the input device is switched to the first electronic device, displaying fourth prompt information, where the fourth prompt information indicates that the user can input information on the first electronic device through the input device.

With reference to the fourth aspect, in some implementations of the fourth aspect, a display location of the fourth prompt information and the display location of the third prompt information are the same, and display effect of the fourth prompt information and display effect of the third prompt information are different.

With reference to the fourth aspect, in some implementations of the fourth aspect, the method further includes: after the focus of the input device is switched to the first electronic device, displaying second input information in the third input box, where the second input information is information input by the user through the input device.

For technical effect of the fourth aspect and the possible implementations, refer to the related descriptions of the second aspect. Details are not described herein.

According to a fifth aspect, a cross-device focus switching apparatus is provided. The apparatus is connected to a first electronic device, and/or a same account is logged in to the apparatus and the first electronic device. There is a focus of an input device on the first electronic device. The apparatus includes: a transceiver unit, configured to: when an area at which a user gazes belongs to an area in which the apparatus is located, and a first input box is displayed on the apparatus, receive first indication information from the first electronic device; and a processing unit, configured to: in response to the first indication information, display the focus of the input device in the first input box, or output first prompt information, where the first prompt information indicates that the user can switch the focus of the input device to the first input box.

With reference to the fifth aspect, in some implementations of the fifth aspect, the transceiver unit is further configured to: send first confirmation information to the first electronic device, where the first confirmation information indicates that the first input box is displayed on the apparatus.

With reference to the fifth aspect, in some implementations of the fifth aspect, the first prompt information is displayed at a first target location, and a distance between the first target location and the first input box is less than or equal to a first threshold.

With reference to the fifth aspect, in some implementations of the fifth aspect, when a second input box is further displayed on the apparatus, the first prompt information is displayed at a second target location, and a distance between the second target location and the second input box is less than or equal to a second threshold. The transceiver unit is further configured to: receive first switching information from the first electronic device; and in response to the first switching information, adjust a display location of the first prompt information from the second target location to a first target location, where a distance between the first target location and the first input box is less than or equal to a first threshold.

With reference to the fifth aspect, in some implementations of the fifth aspect, the processing unit is further configured to: after the focus of the input device is switched to the first input box, display first input information in the first input box, where the first input information is information input by the user through the input device.

With reference to the fifth aspect, in some implementations of the fifth aspect, the processing unit is further configured to: after the focus of the input device is switched to the first input box, display second prompt information, where the second prompt information indicates that the user can input the information on the apparatus through the input device.

With reference to the fifth aspect, in some implementations of the fifth aspect, a display location of the second prompt information and the display location of the first prompt information are the same, and display effect of the second prompt information and display effect of the first prompt information are different.

For technical effect of the fifth aspect and the possible implementations, refer to the related descriptions of the first aspect. Details are not described herein.

According to a sixth aspect, a cross-device focus switching apparatus is provided. The apparatus is connected to an input device, the apparatus is connected to a second electronic device, and/or a same account is logged in to the apparatus and the second electronic device. A focus of the input device is on the second electronic device. The apparatus includes: a processing unit, configured to: when a first condition is met, display the focus of the input device on the apparatus, or output third prompt information, where the third prompt information prompts a user that the focus of the input device can be switched to the apparatus; and the first condition includes: no input box is displayed on the second electronic device; or an area at which the user gazes belongs to an area in which the apparatus is located, and an input box is displayed on the second electronic device.

With reference to the sixth aspect, in some implementations of the sixth aspect, the processing unit is further configured to: obtain an image of the user, and determine a line of sight of the user; and when there is an intersection point between the line of sight of the user and the apparatus, determine that the area at which the user gazes belongs to the area in which the apparatus is located.

With reference to the sixth aspect, in some implementations of the sixth aspect, the apparatus further includes a transceiver unit, configured to: receive second indication information from the second electronic device, where the second indication information indicates whether the input box is displayed on the second electronic device; and the processing unit is further configured to determine, based on the second indication information, whether the input box is displayed on the second electronic device.

With reference to the sixth aspect, in some implementations of the sixth aspect, a third input box is displayed on the apparatus, and the focus of the input device is displayed in the third input box, or the third prompt information prompts the user that the focus of the input device can be switched to the third input box.

With reference to the sixth aspect, in some implementations of the sixth aspect, the third prompt information is displayed at a third target location, and a distance between the third target location and the third input box is less than or equal to a third threshold.

With reference to the sixth aspect, in some implementations of the sixth aspect, when a fourth input box is further displayed on the apparatus, the third prompt information is displayed at a fourth target location, and a distance between the fourth target location and the fourth input box is less than or equal to a fourth threshold; the transceiver unit is further configured to receive second switching information from the input device; and the processing unit is further configured to: after the second switching information is received, adjust a display location of the third prompt information from the fourth target location to a third target location, where a distance between the third target location and the third input box is less than or equal to a third threshold.

With reference to the sixth aspect, in some implementations of the sixth aspect, the processing unit is further configured to: after the focus of the input device is switched to the apparatus, display fourth prompt information, where the fourth prompt information indicates that the user can input the information on the apparatus through the input device.

With reference to the sixth aspect, in some implementations of the sixth aspect, a display location of the fourth prompt information and the display location of the third prompt information are the same, and display effect of the fourth prompt information and display effect of the third prompt information are different.

With reference to the sixth aspect, in some implementations of the sixth aspect, the processing unit is further configured to: after the focus of the input device is switched to the apparatus, display second input information in the third input box, where the second input information is information input by the user through the input device.

For technical effect of the sixth aspect and the possible implementations, refer to the related descriptions of the second aspect. Details are not described herein.

According to a seventh aspect, an electronic device is provided. The electronic device includes one or more processors, a memory, and one or more computer programs. The one or more computer programs are stored in the memory. The one or more computer programs include instructions. When the instructions are executed by the electronic device, the electronic device is enabled to perform the method according to any one of the third aspect or the possible implementations of the third aspect.

According to an eighth aspect, an electronic device is provided. The electronic device includes one or more processors, one or more memories, and one or more computer programs. The one or more computer programs are stored in the one or more memories. The one or more computer programs include instructions. When the instructions are executed by the electronic device, the electronic device is enabled to perform the method according to any one of the fourth aspect or the possible implementations of the fourth aspect.

According to a ninth aspect, a computer program product including instructions is provided. When the computer program product is run on an electronic device, the electronic device is enabled to perform the method according to any one of the third aspect or the possible implementations of the third aspect.

According to a tenth aspect, a computer-readable storage medium is provided. The computer-readable storage medium may be non-volatile. The storage medium includes instructions; and when the instructions are run on an electronic device, the electronic device is enabled to perform the method according to any one of the third aspect or the possible implementations of the third aspect.

According to an eleventh aspect, a chip is provided, and is configured to execute instructions. When the chip runs, the chip performs the method according to any one of the third aspect or the possible implementations of the third aspect; or the chip performs the method according to any one of the fourth aspect or the possible implementations of the fourth aspect.

### BRIEF DESCRIPTION OF DRAWINGS

FIG. 1 is a diagram of a hardware structure of an electronic device according to an embodiment of this application;
FIG. 2 is a block diagram of a software structure of an electronic device according to an embodiment of this application;
FIG. 3 is an example diagram of an example of an application scenario according to an embodiment of this application;
FIG. 4(a) to FIG. 4(c) are a diagram of a group of GUIs according to an embodiment of this application;
FIG. 5(a) to FIG. 5(d) are a diagram of another group of GUIs according to an embodiment of this application;
FIG. 6(a) to FIG. 6(c) are a diagram of another group of GUIs according to an embodiment of this application;
FIG. 7(a) to FIG. 7(d) are a diagram of another group of GUIs according to an embodiment of this application;
FIG. 8 is a schematic flowchart of an example of a cross-device focus switching method according to an embodiment of this application;
FIG. 9 is a schematic flowchart of another example of a cross-device focus switching method according to an embodiment of this application;
FIG. 10 is a schematic flowchart of still another example of a cross-device focus switching method according to an embodiment of this application;
FIG. 11 is a schematic flowchart of still another example of a cross-device focus switching method according to an embodiment of this application;
FIG. 12 is a block diagram of an example of a cross-device focus switching apparatus according to an embodiment of this application; and
FIG. 13 is a diagram of a structure of an electronic device according to an embodiment of this application.

### DESCRIPTION OF EMBODIMENTS

The following describes technical solutions in embodiments of this application with reference to accompanying drawings.

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

A method provided in embodiments of this application may be applied to an electronic device, for example, a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

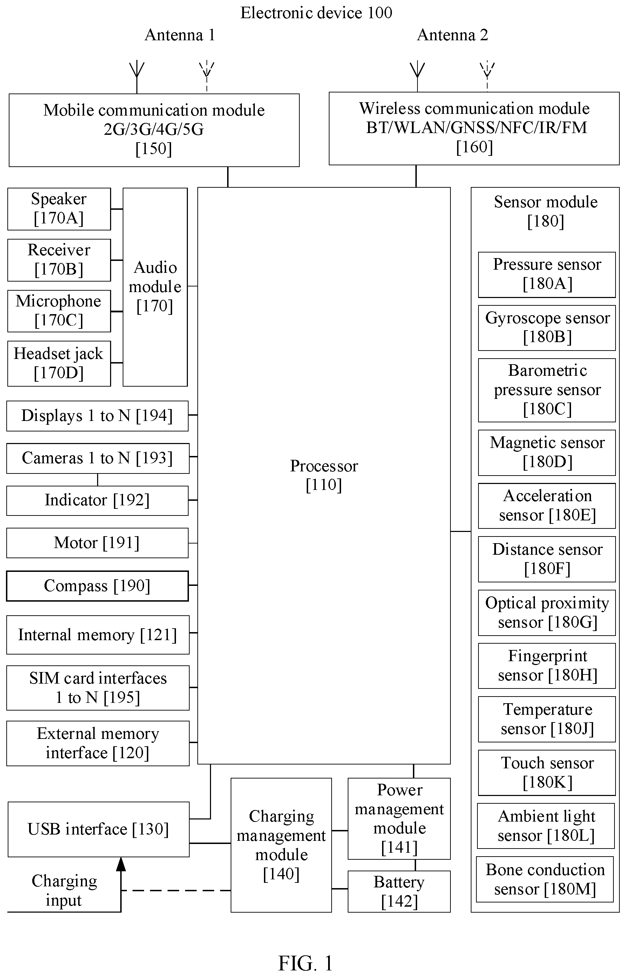

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to be connected to a charger to charge the electronic device 100, or may be configured to transmit data between the electronic device 100 and a peripheral device, or may be configured to be connected to a headset for playing audio through the headset. Alternatively, the interface may be configured to be connected to another electronic device, for example, an AR device.

It may be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection manner different from that in the foregoing embodiments, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to be connected to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor a parameter such as a battery capacity, a battery cycle count, or a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. Applications such as intelligent cognition of the electronic device 100 may be implemented through the NPU, for example, image recognition, facial recognition, voice recognition, and text understanding.

The external memory interface 120 may be used to be connected to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an App required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through a mouth of the user, and input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to be connected to a wired headset. The headset jack 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a change in the capacitance. When a touch operation is performed on the display 194, the electronic device 100 detects intensity of the touch operation through the pressure sensor 180A. The electronic device 100 may also compute a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an application icon "Messaging", an instruction for viewing an SMS message is performed. When a touch operation whose touch operation intensity is greater than or equal to the first pressure threshold is performed on the application icon "Messaging", an instruction for creating a new SMS message is performed.

The gyroscope sensor 180B may be configured to determine a moving posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, computes, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 computes an altitude through the barometric pressure measured by the barometric pressure sensor 180C, to assist in positioning and navigation.

The magnetic sensor 180D includes a Hall sensor. The electronic device 100 may detect opening and closing of a flip cover through the magnetic sensor 180D. In some embodiments, when the electronic device 100 is a flip phone, the electronic device 100 may detect opening and closing of a flip cover through the magnetic sensor 180D. Further, a feature such as automatic unlocking of the flip cover is set based on a detected opening or closing state of the leather case or a detected opening or closing state of the flip cover.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure the distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, through the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may also be customized.

The indicator 192 may be an indicator, and may be configured to indicate a charging status and a power change, or may be configured to indicate a message, a missed call, a notification, and the like.

The SIM card interface 195 is configured to be connected to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an embedded-SIM (embedded-SIM, eSIM) card, namely, an embedded-SIM card. The eSIM card may be embedded into the electronic device 100, and cannot be separated from the electronic device 100.

It should be understood that a calling card in embodiments of this application includes but is not limited to a SIM card, an eSIM card, a universal subscriber identity module (universal subscriber identity module, USIM) card, a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

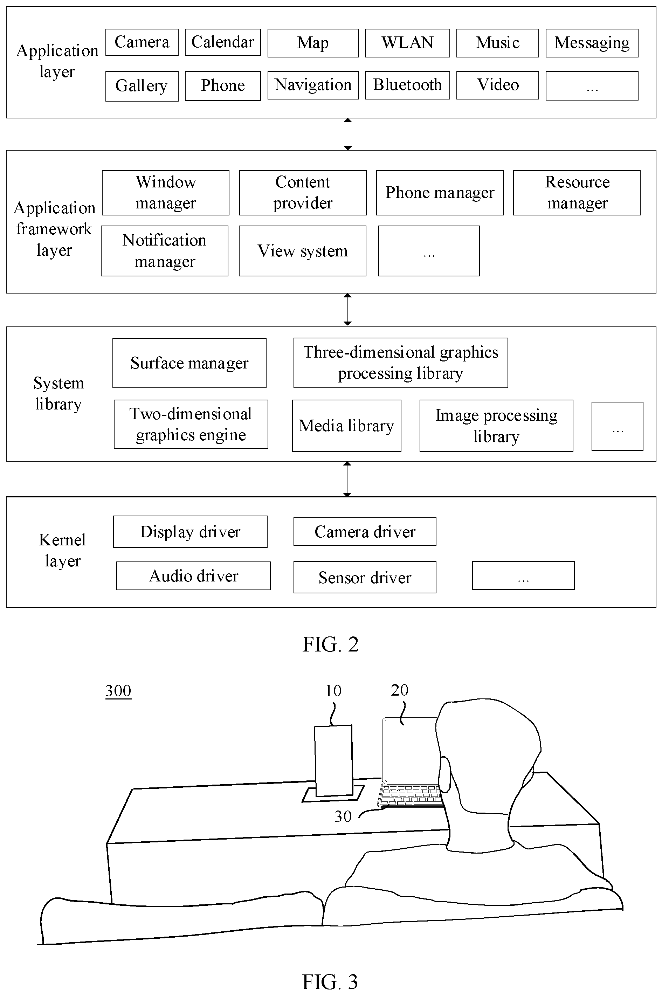

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and a system library, and a kernel layer. The application layer may include a series of application packages.

As shown in FIG. 2, the application package may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including a messaging notification icon may include a text display view and an image display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or the indicator blinks.

The Android runtime includes a kernel library and a virtual machine. The Android runtime is responsible for scheduling and management of an Android system.

The kernel library includes two parts: a performance function that needs to be called in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android^{®}, iOS^{®}, and HarmonyOS^{®}.

FIG. 3 is an example diagram of a cross-device focus switching application scenario 300 according to an embodiment of this application.

As shown in FIG. 3, the application scenario 300 includes a mobile phone 10, a tablet 20, and a keyboard 30. A distance between the mobile phone 10 and the tablet 20 is very close (for example, a distance between the mobile phone 10 and the tablet 20 is less than or equal to 40 cm). In addition, the mobile phone 10 is connected to the tablet 20, or a same account is logged in to the mobile phone 10 and the tablet 20. The keyboard 30 is connected to the tablet 20. In other words, a user can input text information on the tablet 20 through the keyboard 30.

It should be noted that the device shown in the application scenario 300 in FIG. 3 is merely an example, and should not constitute a limitation on this application. For example, FIG. 3 may further include another device that is not shown. For another example, the tablet 20 shown in FIG. 3 may alternatively be a computer.

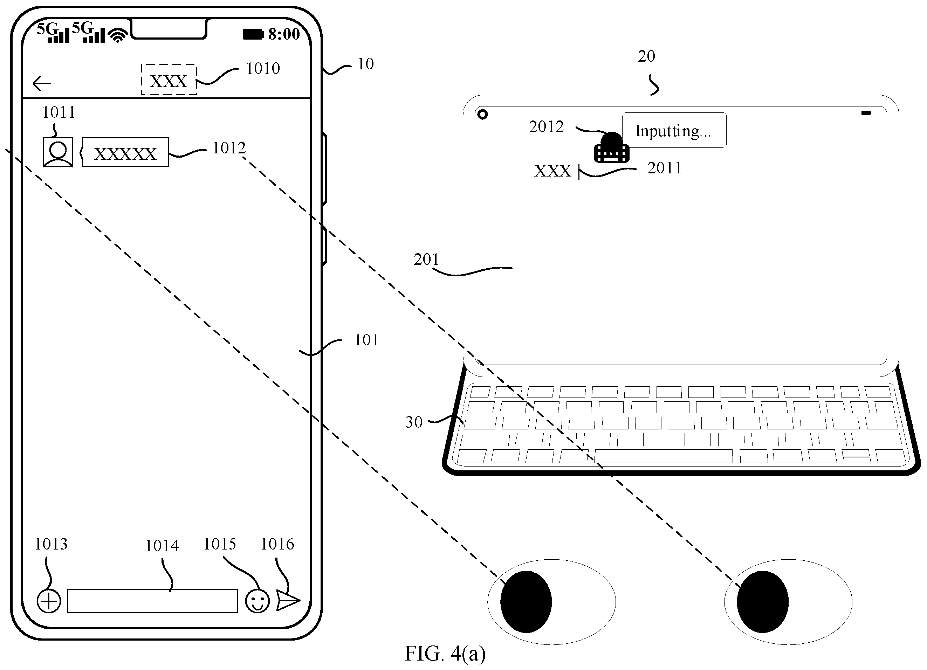

With reference to FIG. 4(a) to FIG. 4(c) to FIG. 7(a) to FIG. 7(d), the following describes changes of graphical user interfaces (graphical user interfaces, GUI) of the mobile phone 10 and the tablet 20 in the application scenario 300 shown in FIG. 3.

FIG. 4(a) to FIG. 4(c) are a diagram of a group of graphical user interfaces (graphical user interfaces, GUI) of the mobile phone 10 and the tablet 20 in the application scenario 300 according to an embodiment of this application.

As shown in FIG. 4(a), the mobile phone 10 displays a display interface 101 of a chat record with a contact "XXX". The display interface 101 displays a name 1010 of the contact "XXX", a profile picture 1011 of the contact "XXX", content 1012 of the chat record between the user and the contact "XXX", an additional function control 1013, a text input box 1014, an emoji control 1015, and a sending control 1016. The text input box 1014 may be used to input a text. In this case, because a focus of the keyboard 30 is not on the mobile phone 10, there is no text input and no cursor in the text input box 1014 shown in FIG. 4(a), that is, in this case, the text input box 1014 is not in a state of inputting a text.

As shown in FIG. 4(a), the tablet 20 displays a display interface 201 of a text, and the display interface 201 displays text information "XXX". In this case, because the focus of the keyboard 30 is on the tablet 20, the tablet 20 may display prompt information A to prompt the user that the focus of the keyboard 30 is on the tablet 20, and the user can input information on the tablet 20 through the keyboard 30.

For example, as shown in FIG. 4(a), the prompt information A may include at least one of the following: a cursor 2011, an icon 2012 and text information "inputting...". In this case, the cursor 2011 is in a blinking state on the display interface 201, and the icon 2012 is in a highlighted state on the display interface 201.

When the tablet 20 determines that an area at which the user gazes belongs to an area in which the mobile phone 10 is located, the tablet 20 controls the mobile phone 10 to display prompt information B on the display interface 101 to prompt the user that the focus of the keyboard 30 can be switched from the tablet 20 to the text input box 1014 of the mobile phone 10. In this case, the user cannot input information in the text input box 1014 through the keyboard 30.

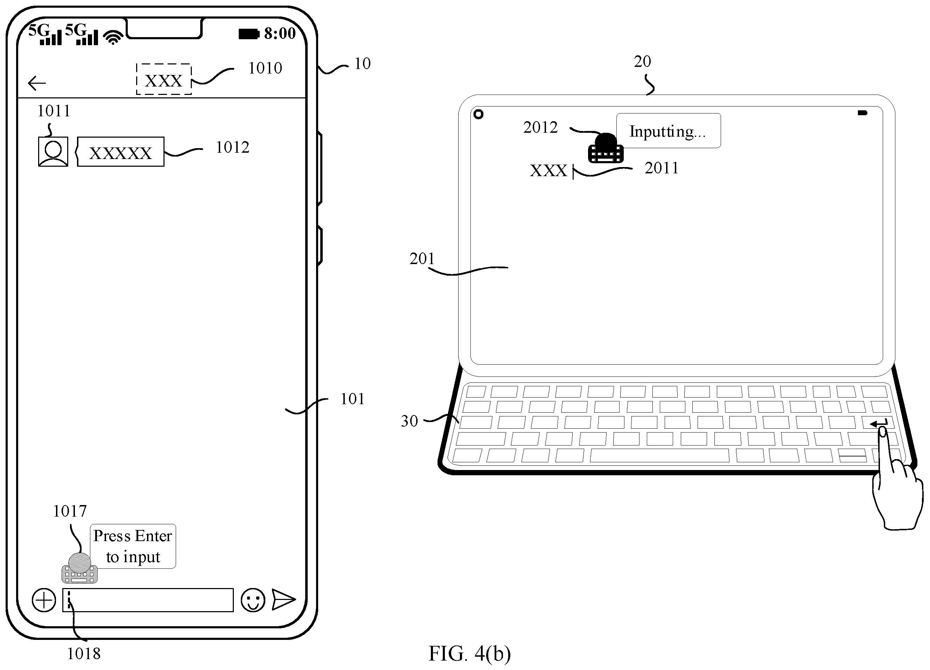

For example, as shown in FIG. 4(b), the prompt information B may include at least one of the following: an icon 1017, text information "press Enter to input", and a cursor 1018. In this case, the icon 1017 is in a gray state on the display interface 101, and the cursor 1018 is a dashed-line cursor on the display interface 101 and/or is in a non-blinking state.

For example, the prompt information B may be displayed near the text input box 1014.

As shown in FIG. 4(b), the icon 1017 and the text information "press Enter to input" are displayed near the text input box 1014, and the cursor 1018 is displayed in the text input box 1014.

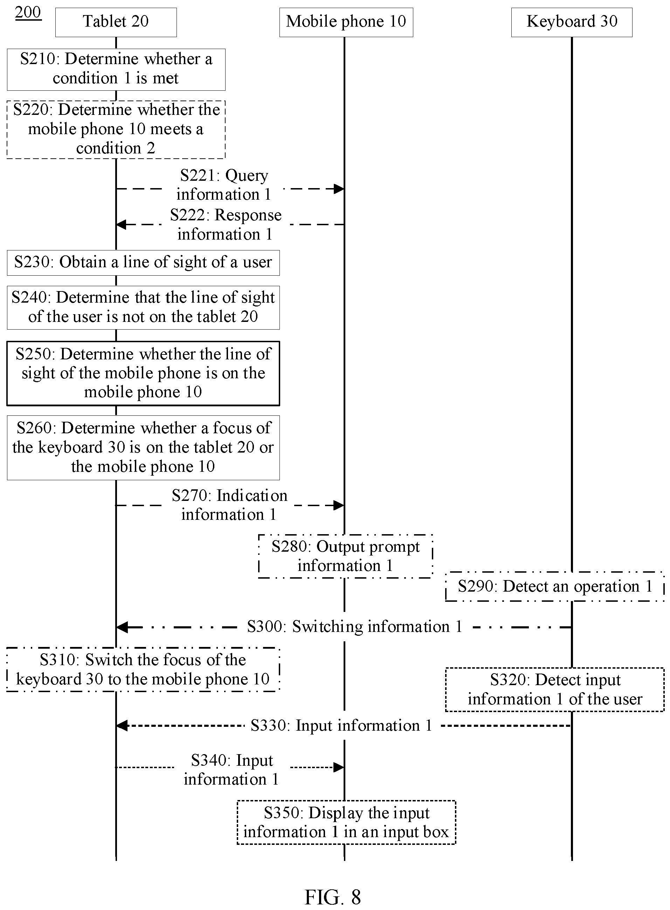

For a solution in which the tablet 20 determines the area at which the user gazes, refer to the following solution in which the tablet 20 determines the area at which the user gazes in FIG. 8. Details are not described herein.

In this case, if the user wants to switch the focus of the keyboard 30 from the tablet 20 to the text input box 1014 of the mobile phone 10, the user may press an Enter key on the keyboard 30. After the keyboard 30 detects that the user presses the Enter key, the tablet 20 switches the focus of the keyboard 30 from the tablet 20 to the text input box 1014 of the mobile phone 10. After the focus of the keyboard 30 is switched from the tablet 20 to the text input box 1014 of the mobile phone 10, the user can input information in the text input box 1014 through the keyboard 30.

Optionally, after the focus of the keyboard 30 is switched from the tablet 20 to the text input box 1014 of the mobile phone 10, the mobile phone 10 may further display prompt information C to prompt the user that the focus of the keyboard 30 has been switched to the text input box 1014 of the mobile phone 10.

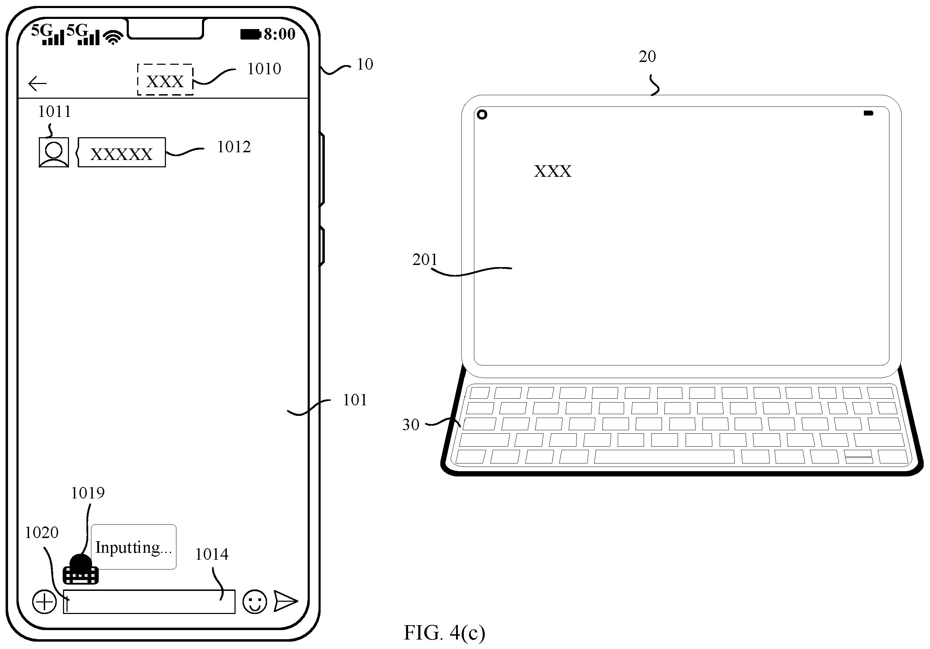

For example, as shown in FIG. 4(c), the prompt information C may include at least one of the following: an icon 1019, text information "inputting...", and a cursor 1020. In this case, the icon 1019 is in a highlighted state on the display interface 101, and the cursor 1020 is a solid-line cursor on the display interface 101 and/or is in a blinking state.

For example, the prompt information C may be displayed near the text input box 1014.

As shown in FIG. 4(c), the icon 1019 and the text information "inputting..." are displayed near the text input box 1014, and the cursor 1020 is displayed in the text input box 1014.

In addition, the display interface 201 of the tablet 20 no longer displays the prompt information A. In this case, the user cannot edit, through the keyboard 30, the text displayed on the display interface 201 of the tablet 20.

For example, as shown in FIG. 4(c), the display interface 201 of the tablet 20 no longer displays the cursor 2011, the icon 2012, and the text information "inputting...".

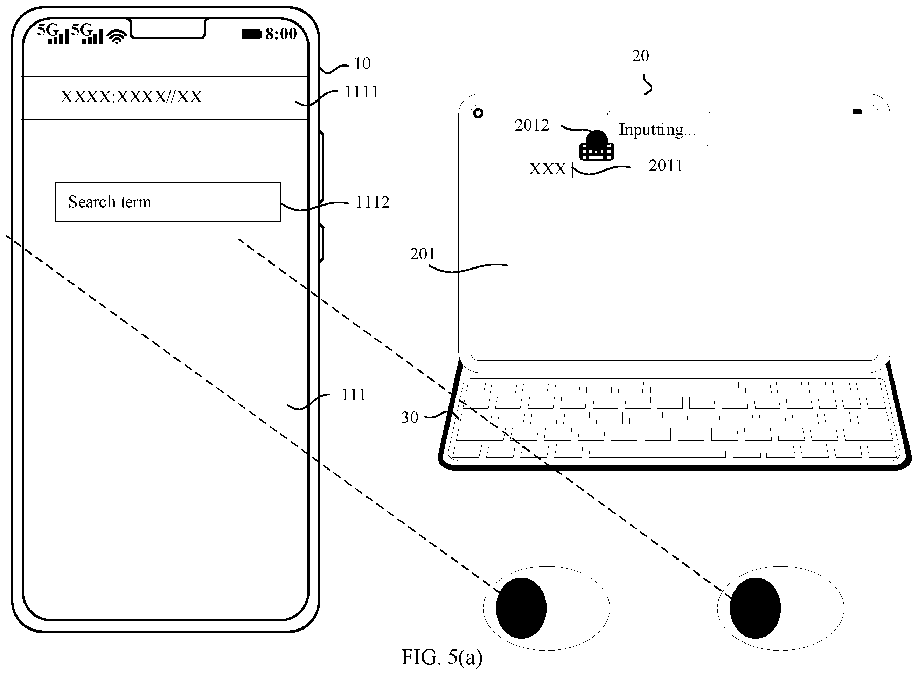

FIG. 5(a) to FIG. 5(d) are a diagram of another group of GUIs of the mobile phone 10 and the tablet 20 in the application scenario 300 according to an embodiment of this application.

As shown in FIG. 5(a), the mobile phone 10 displays a display interface 111 of a search web page. The display interface 111 displays a website address input box 1111 and a search term input box 1112, and the website address input box 1111 displays text information "XXXX:XXXX//XX". Both the website address input box 1111 and the search term input box 1112 may be used to input a text. In this case, because a focus of the keyboard 30 is not on the mobile phone 10, there is no cursor in either the website address input box 1111 or the search term input box 1112 shown in FIG. 5(a), that is, in this case, neither the website address input box 1111 nor the search term input box 1112 is in a state of inputting a text.

The GUI of the tablet 20 shown in FIG. 5(a) is the same as the GUI of the tablet 20 shown in FIG. 4(a). For descriptions of the GUI of the tablet 20 shown in FIG. 5(a), refer to the related descriptions in FIG. 4(a). Details are not described herein again.

When the tablet 20 determines that an area at which the user gazes belongs to an area in which the mobile phone 10 is located, the tablet 20 controls the mobile phone 10 to display prompt information D on the display interface 111 to prompt the user that the focus of the keyboard 30 can be switched from the tablet 20 to the input box of the mobile phone 10. In this case, the user cannot input information in the input box of the mobile phone 10 through the keyboard 30.

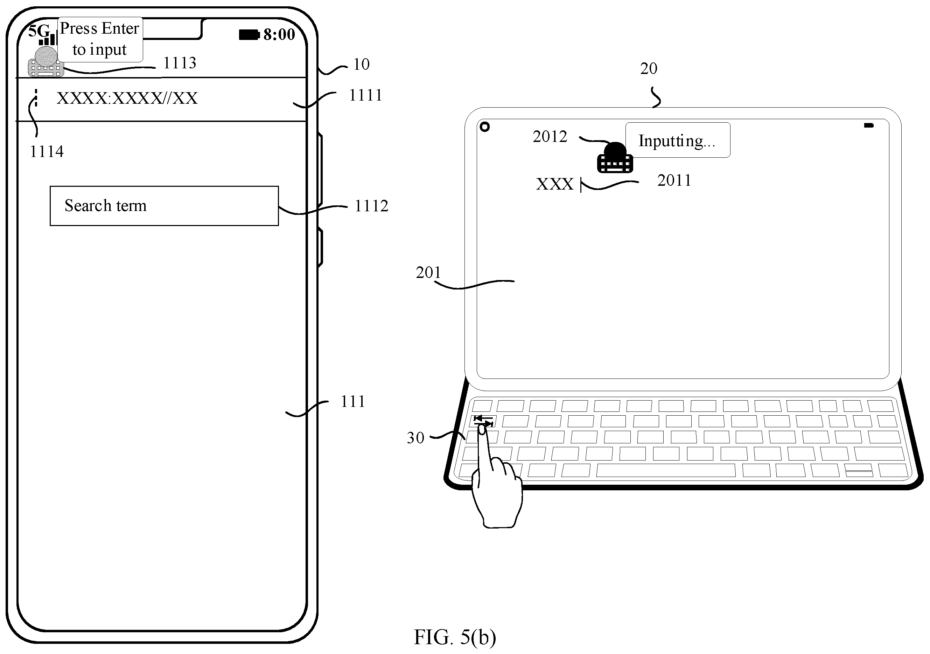

For example, as shown in FIG. 5(b), the prompt information D includes at least one of the following: an icon 1113, text information "press Enter to input", and a cursor 1114. In this case, the icon 1113 is in a gray state on the display interface 111, and the cursor 1114 is a dashed-line cursor on the display interface 111 and/or is in a non-blinking state.

Because two input boxes (the website address input box 1111 and the search term input box 1112) are displayed on the mobile phone 10, the prompt information D may be displayed near one of the input boxes (an input box, of the mobile phone 10, in which the focus is previously located or a 1^{st} input box on the display interface 111 of the mobile phone 10), to prompt the user that the focus of the keyboard 30 can be switched from the tablet 20 to the input box, of the mobile phone 10, near the prompt information D.

For example, as shown in FIG. 5(b), the icon 1113 and the text information "press Enter to input" are displayed near the website address input box 1111, and the cursor 1114 is displayed in the website address input box 1111.

In an example, in this case, if the user wants to switch the focus of the keyboard 30 from the tablet 20 to the search term input box 1112 of the mobile phone 10, the user may press a Tab key on the keyboard 30. After the keyboard 30 detects that the user presses the Tab key, the tablet 20 controls the mobile phone 10 to adjust a location of the prompt information D displayed on the display interface 111 of the mobile phone 10.

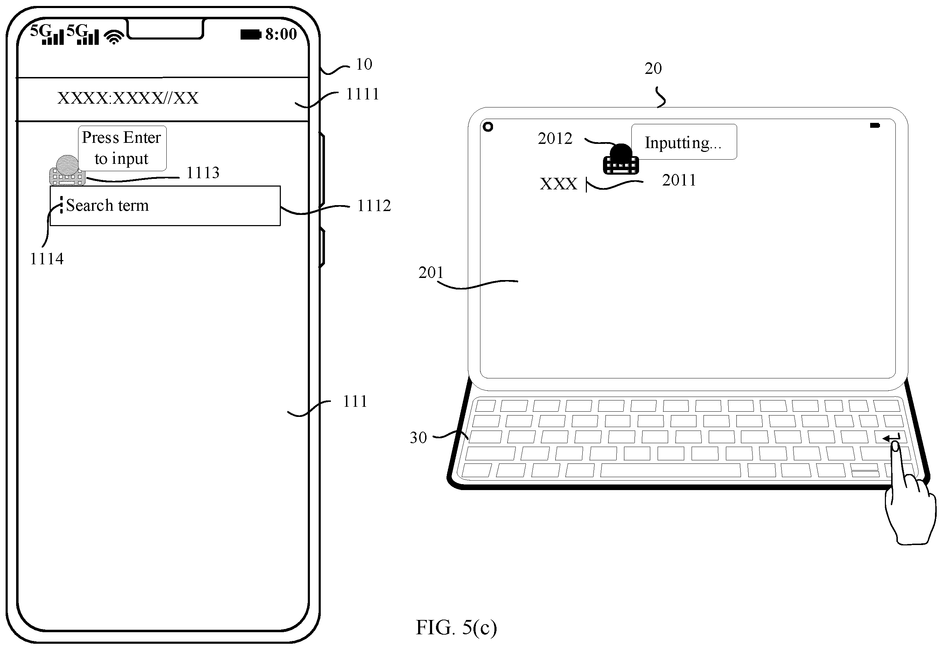

For example, after the keyboard 30 detects that the user presses the Tab key, as shown in FIG. 5(c), the tablet 20 controls the mobile phone 10 to move the icon 1113 and the text information "press Enter to input" to a location near the search term input box 1112, and move the cursor 1114 to the search term input box 1112.

After the keyboard 30 detects that the user presses an Enter key, the tablet 20 switches the focus of the keyboard 30 from the tablet 20 to the search term input box 1112 of the mobile phone 10. After the focus of the keyboard 30 is switched from the tablet 20 to the search term input box 1112 of the mobile phone 10, the user can input information in the search term input box 1112 through the keyboard 30.

Optionally, after the focus of the keyboard 30 is switched from the tablet 20 to the search term input box 1112 of the mobile phone 10, the mobile phone 10 may further display prompt information E to prompt the user that the focus of the keyboard 30 has been switched to the search term input box 1112 of the mobile phone 10.

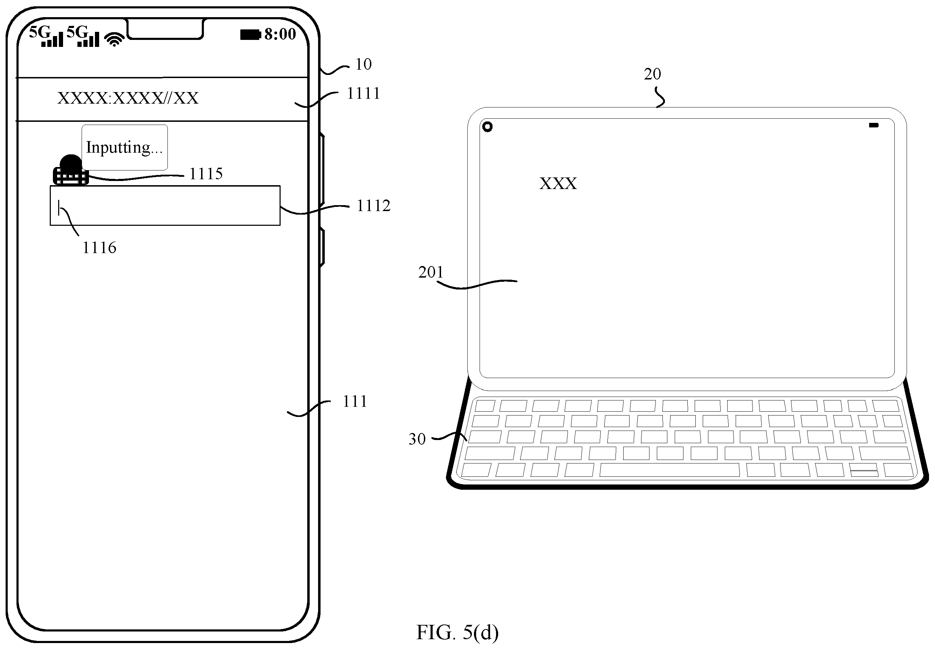

For example, as shown in FIG. 5(d), the prompt information E may include at least one of the following: an icon 1115, text information "inputting...", and a cursor 1116. In this case, the icon 1115 is in a highlighted state on the display interface 111, and the cursor 1116 is a solid-line cursor on the display interface 111 and/or is in a blinking state.

For example, the prompt information E may be displayed near the search term input box 1112.

As shown in FIG. 5(d), the icon 1115 and the text information "inputting..." are displayed near the search term input box 1112, and the cursor 1116 is displayed in the search term input box 1112.

In another example, in this case, if the user wants to switch the focus of the keyboard 30 from the tablet 20 to the website address input box 1111 of the mobile phone 10, the user may press an Enter key on the keyboard 30. After the focus of the keyboard 30 is switched from the tablet 20 to the website address input box 1111 of the mobile phone 10, the user can input information in the website address input box 1111 through the keyboard 30.

Optionally, after the focus of the keyboard 30 is switched from the tablet 20 to the website address input box 1111 of the mobile phone 10, the mobile phone 10 may further display prompt information F to prompt the user that the focus of the keyboard 30 has been switched to the website address input box 1111 of the mobile phone 10.

For example, content included in the prompt information F may be similar to content included in the prompt information E, and details are not described herein again.

For example, the prompt information F may be displayed near the website address input box 1111.

In addition, after the focus of the keyboard 30 is switched from the tablet 20 to the mobile phone 10, the display interface 201 of the tablet 20 no longer displays the prompt information A. In this case, the user cannot edit, through the keyboard 30, the text displayed on the display interface 201 of the tablet 20.

For example, as shown in FIG. 5(d), the display interface 201 of the tablet 20 no longer displays the cursor 2011, the icon 2012, and the text information "inputting...".

According to the examples in FIG. 4(a) to FIG. 4(c) and FIG. 5(a) to FIG. 5(d), when the focus of the keyboard 30 is on the tablet 20, the text input box is displayed on the mobile phone 10, and the tablet 20 determines that the user gazes at the area in which the mobile phone 10 is located, the tablet 20 may control the mobile phone 10 to prompt the user on the mobile phone 10. In this way, the user can directly switch the focus of the keyboard 30 from the tablet 20 to the text input box of the mobile phone 10 through the keyboard 30 based on the prompt on the mobile phone 10. The operation is simple, so that user experience can be improved.

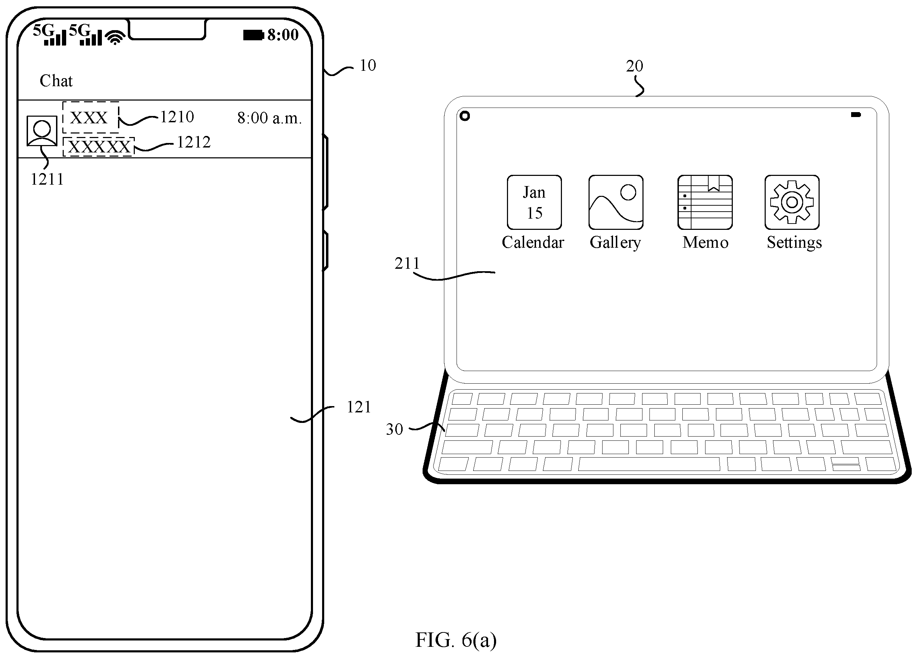

FIG. 6(a) to FIG. 6(c) are a diagram of still another group of GUIs of the mobile phone 10 and the tablet 20 in the application scenario 300 according to an embodiment of this application.

As shown in FIG. 6(a), the mobile phone 10 displays a display interface 121 of a chat application. The display interface 121 displays a name 1210 of a contact "XXX", a profile picture 1211 of the contact "XXX", content 1212 of a latest chat record between a user and the contact "XXX", and time (8:00 a.m.) of the latest chat record between the user and the contact "XXX". In this case, no input box is displayed on the display interface 121.

As shown in FIG. 6(a), the tablet 20 displays a desktop of the tablet 20. The desktop of the tablet 20 includes icons of a plurality of applications, and the plurality of applications include Calendar, Gallery, Memo, Settings, and the like.

When the tablet 20 determines that no input box is displayed on the display interface 121 of the mobile phone 10, the tablet 20 may display prompt information G on the display interface 121 of the mobile phone 10 to prompt the user that a focus of the keyboard 30 can be switched from the mobile phone 10 to the tablet 20. In this case, the user cannot input information on the tablet 20 through the keyboard 30.

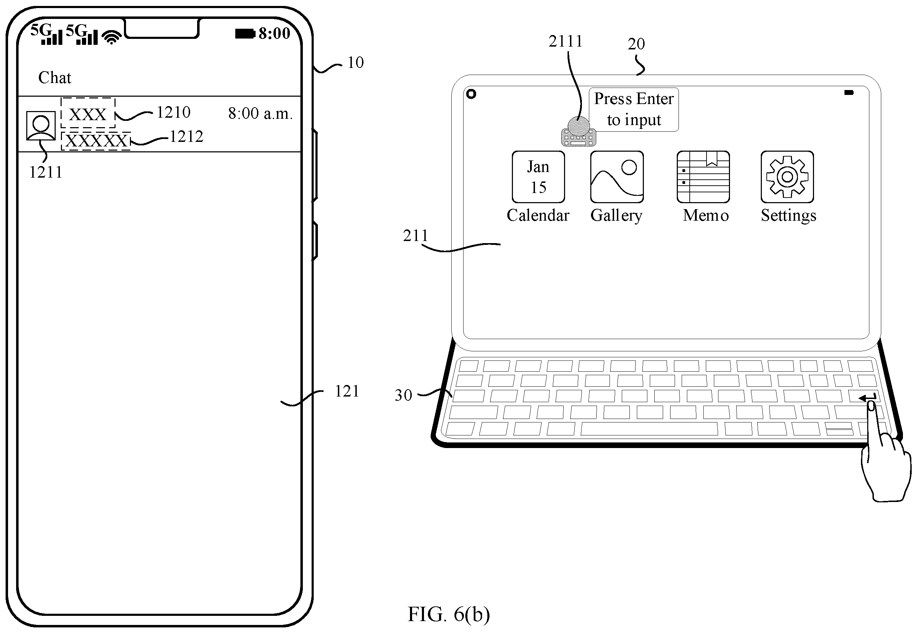

For example, as shown in FIG. 6(b), the prompt information G may include at least one of the following: an icon 2111 and text information "press Enter to input". In this case, the icon 2111 is in a gray state on a display interface 211.

It should be noted that, in this case, regardless of whether an area at which the user gazes belongs to an area in which the tablet 20 is located, provided that the tablet 20 determines that no input box is displayed on the display interface 121 of the mobile phone 10, the tablet 20 may display prompt information I on the display interface 121 of the mobile phone 10.

In this case, if the user wants to switch the focus of the keyboard 30 from the mobile phone 10 to the tablet 20, the user may press an Enter key on the keyboard 30. After the keyboard 30 detects that the user presses the Enter key, the tablet 20 switches the focus of the keyboard 30 from the mobile phone 10 to the tablet 20. After the focus of the keyboard 30 is switched from the mobile phone 10 to the tablet 20, the user may operate the tablet 20 through the keyboard 30.

Optionally, after the focus of the keyboard 30 is switched from the mobile phone 10 to the tablet 20, the mobile phone 10 may further display prompt information H to prompt the user that the focus of the keyboard 30 has been switched to the tablet 20.

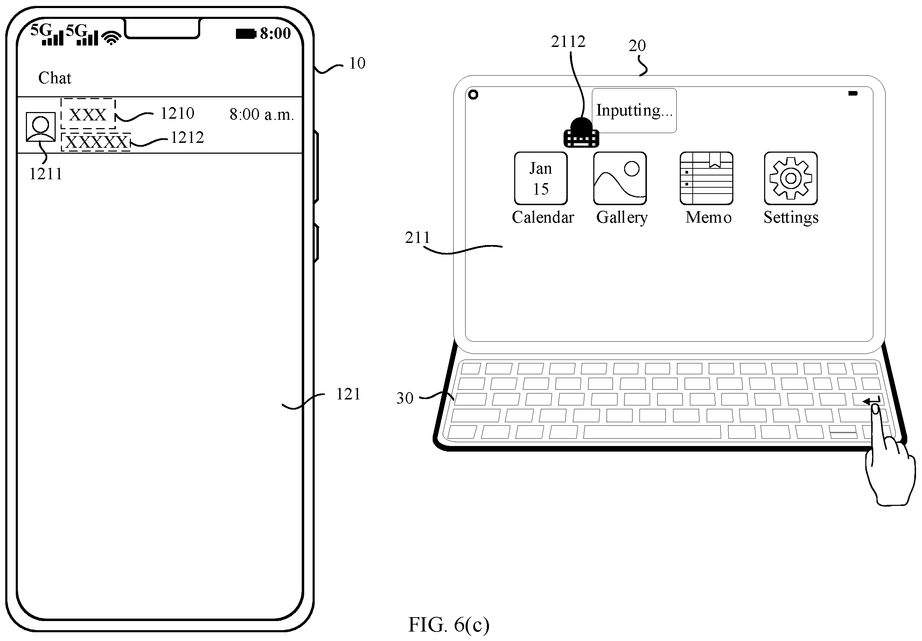

For example, as shown in FIG. 6(c), the prompt information H may include at least one of the following: an icon 2112 and text information "inputting...". In this case, the icon 2112 is in a highlighted state on the display interface 211.

According to the example in FIG. 6(a) to FIG. 6(c), when the focus of the keyboard 30 is on the mobile phone 10, and no input box is displayed on the mobile phone 10, the tablet 20 may prompt the user on the tablet 20. In this way, the user can directly switch the focus of the keyboard 30 from the mobile phone 10 to the tablet 20 through the keyboard 30 based on the prompt on the tablet 20. The operation is simple, so that user experience can be improved.

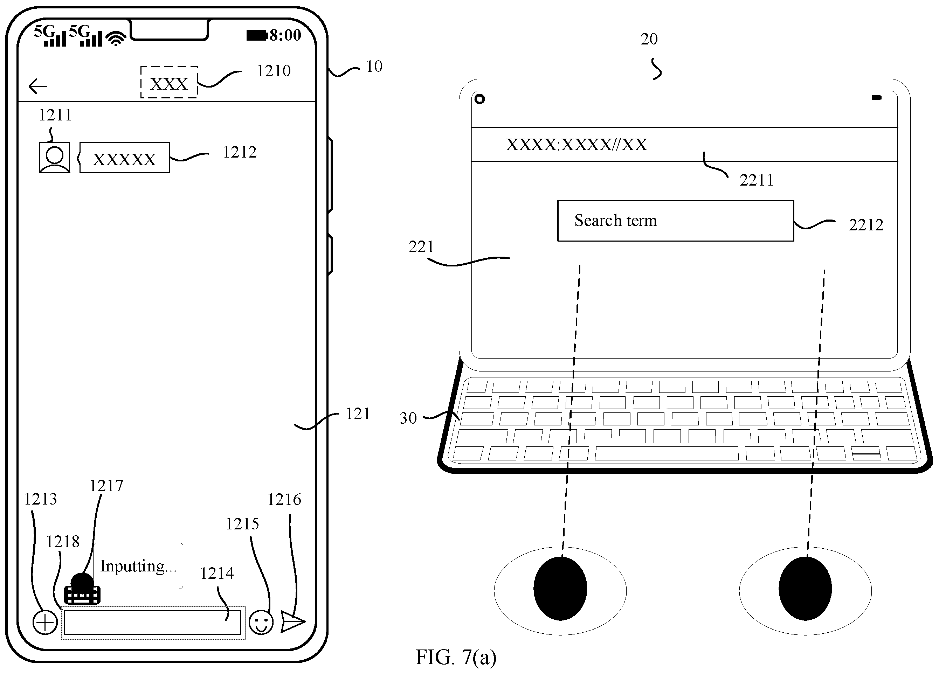

FIG. 7(a) to FIG. 7(d) are a diagram of still another group of GUIs of the mobile phone 10 and the tablet 20 in the application scenario 300 according to an embodiment of this application.

As shown in FIG. 7(a), the mobile phone 10 displays a display interface 121 of a chat record with a contact "XXX". The display interface 121 displays a name 1210 of the contact "XXX", a profile picture 1211 of the contact "XXX", content 1212 of the chat record between a user and the contact "XXX", an additional function control 1213, a text input box 1214, an emoji control 1215, and a sending control 1216. The text input box 1214 may be used to input a text.

In this case, because a focus of the keyboard 30 is on the mobile phone 10, the mobile phone 10 may display prompt information L to prompt a user that the focus of the keyboard 30 is in the text input box 1214 of the mobile phone 10, and the user can input information in the text input box 1214 through the keyboard 30.

For example, as shown in FIG. 7(a), the prompt information L may include at least one of the following: an icon 1217, and text information "inputting...". In this case, the icon 1217 is in a highlighted state on the display interface 121.

Optionally, the tablet 20 may further highlight the text input box 1214.

For example, as shown in FIG. 7(a), the mobile phone 10 may further display a box 1218 around the text input box 1214, to highlight the text input box 1214.

When the tablet 20 determines that an area at which the user gazes belongs to an area in which the tablet 20 is located, the tablet 20 may display prompt information I on a display interface 211 of the tablet 20 to prompt the user that the focus of the keyboard 30 can be switched from the mobile phone 10 to the tablet 20. In this case, the user cannot input information on the tablet 20 through the keyboard 30.

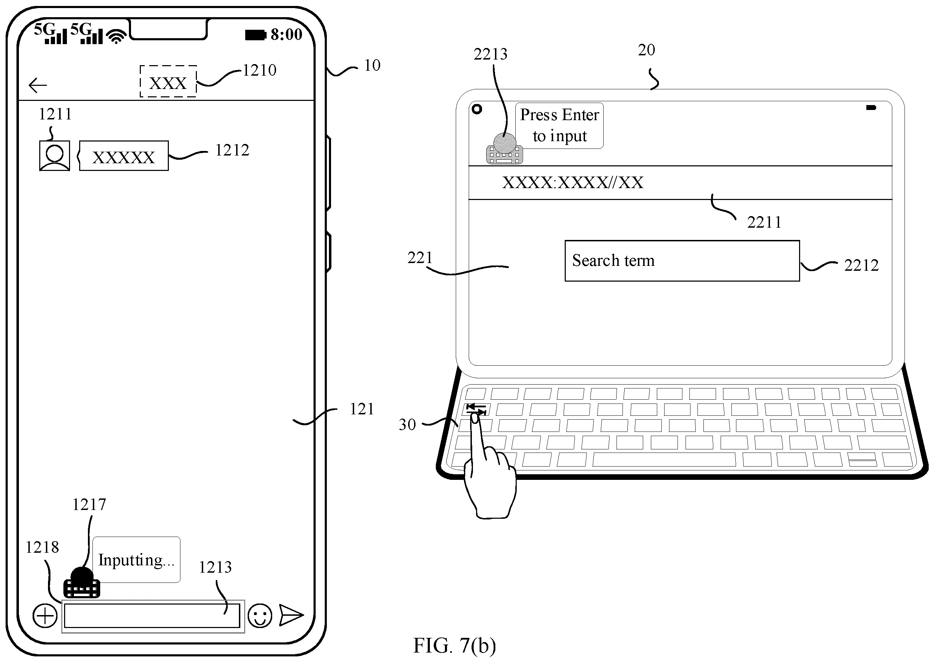

For example, as shown in FIG. 7(b), the prompt information I may include at least one of the following: an icon 2113 and text information "press Enter to input". In this case, the icon 2113 is in a gray state on the display interface 221.

Because two input boxes (a website address input box 2211 and a search term input box 2212) are displayed on the tablet 20, the prompt information I may be displayed near one of the input boxes (an input box, of the tablet 20, in which the focus is previously located or a 1^{st} input box on the display interface 221 of the tablet 20), to prompt the user that the focus of the keyboard 30 can be switched from the mobile phone 10 to the input box, of the tablet 20, near the prompt information I.

For example, as shown in FIG. 7(b), the icon 2213 and the text information "press Enter to input" are displayed near the website address input box 2211.

It should be noted that, in this case, regardless of whether the input box is displayed on the mobile phone 10, provided that the tablet 20 determines that the area at which the user gazes belongs to the area in which the tablet 20 is located, the tablet 20 can display the prompt information I on the display interface 211 of the tablet 20.

In an example, in this case, if the user wants to switch the focus of the keyboard 30 from the mobile phone 10 to the search term input box 2212 of the tablet 20, the user may press a Tab key on the keyboard 30. After the keyboard 30 detects that the user presses the Tab key, the tablet 20 may adjust a location of the prompt information I displayed on the display interface 221 of the tablet 20.

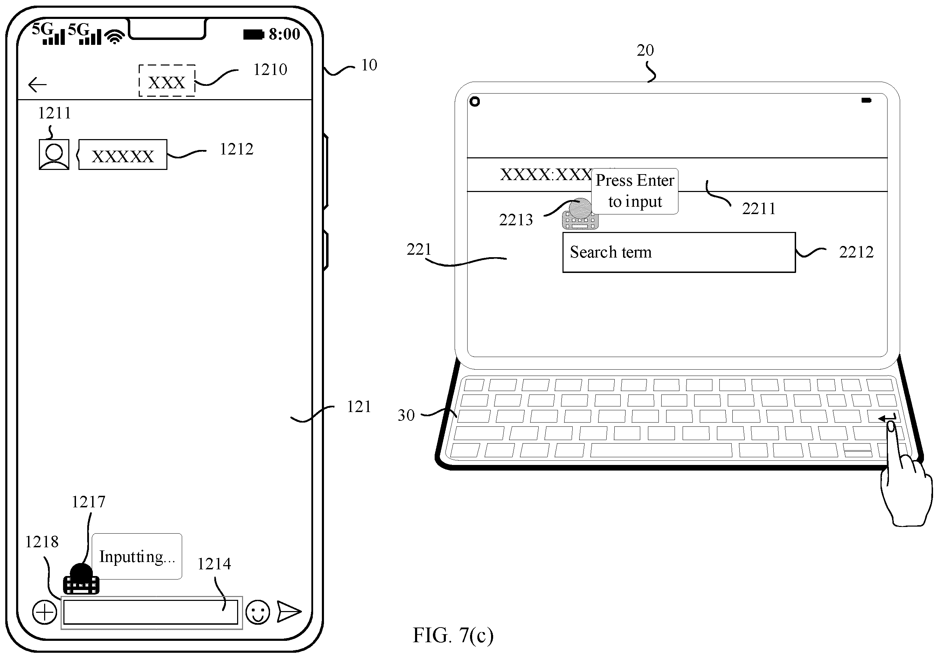

For example, after the keyboard 30 detects that the user presses the Tab key, as shown in FIG. 7(c), the tablet 20 moves the icon 2213 and the text information "press Enter to input" to a location near the search term input box 2212.

After the keyboard 30 detects that the user presses an Enter key, the tablet 20 switches the focus of the keyboard 30 from the mobile phone 10 to the search term input box 2212 of the tablet 20. After the focus of the keyboard 30 is switched from the mobile phone 10 to the search term input box 2212 of the tablet 20, the user can input information in the search term input box 2212 through the keyboard 30.

Optionally, after the focus of the keyboard 30 is switched from the mobile phone 10 to the search term input box 2212 of the tablet 20, the mobile phone 10 may further display prompt information J to prompt the user that the focus of the keyboard 30 has been switched to the search term input box 2212 of the tablet 20.

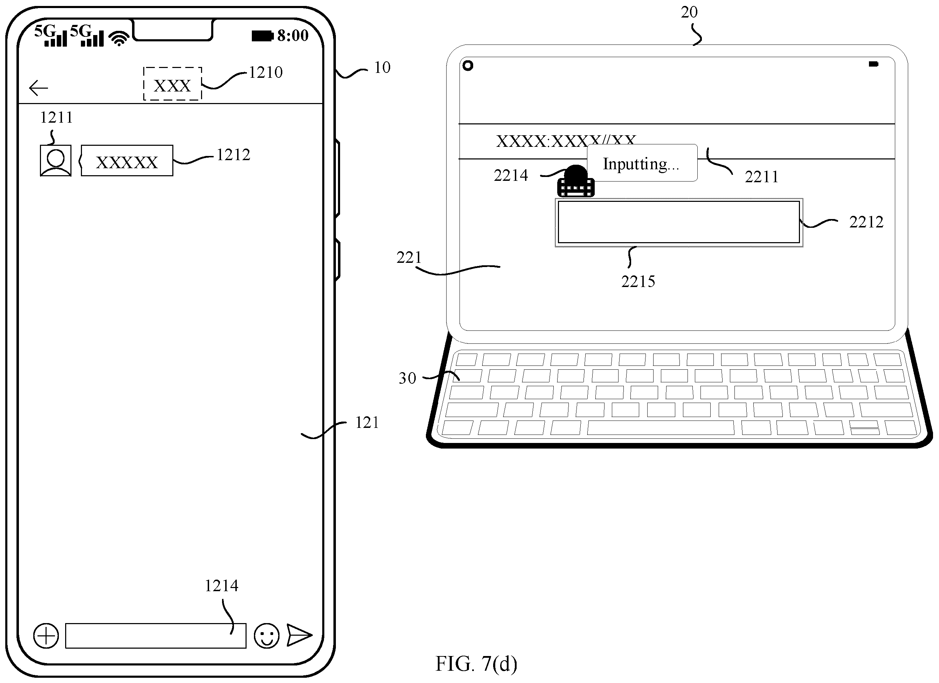

For example, as shown in FIG. 7(d), the prompt information J may include at least one of the following: an icon 2214 and text information "inputting...". In this case, the icon 2214 is in a highlighted state on the display interface 221.

For example, the prompt information J may be displayed near the search term input box 2212.

As shown in FIG. 7(d), the icon 2214 and the text information "inputting..." are displayed near the search term input box 2212.

Optionally, in this example, as shown in FIG. 7(d), "search term" may no longer be displayed in the search term input box 2212.

Optionally, after the focus of the keyboard 30 is switched from the mobile phone 10 to the search term input box 2212 of the tablet 20, the tablet 20 may further highlight the search term input box 2212.

For example, as shown in FIG. 7(d), the tablet 20 may further display a box 2215 around the website address input box 2211, to highlight the search term input box 2212.

In another example, in this case, if the user wants to switch the focus of the keyboard 30 from the mobile phone 10 to the website address input box 2211 of the tablet 20, the user may press an Enter key on the keyboard 30. After the focus of the keyboard 30 is switched from the mobile phone 10 to the website address input box 2211 of the tablet 20, the user can input information in the website address input box 2211 through the keyboard 30.

Optionally, after the focus of the keyboard 30 is switched from the mobile phone 10 to the website address input box 2211 of the tablet 20, the tablet 20 may further display prompt information K to prompt the user that the focus of the keyboard 30 has been switched to the website address input box 2211 of the mobile phone 10.

For example, content included in the prompt information K may be similar to content included in the prompt information J, and details are not described herein again.

For example, the prompt information K may be displayed near the website address input box 2211.

Optionally, after the focus of the keyboard 30 is switched from the mobile phone 10 to the website address input box 2211 of the tablet 20, the tablet 20 may further highlight the website address input box 2211.

In addition, the display interface 121 of the mobile phone 10 no longer displays the prompt information L. In this case, the user cannot input information in the text input box 1214 of the mobile phone 10 through the keyboard 30.

For example, as shown in FIG. 7(d), the display interface 121 of the mobile phone 10 no longer displays the cursor 1218, the icon 1217, and the text information "inputting...".

According to the example in FIG. 7(a) to FIG. 7(d), when the focus of the keyboard 30 is on the mobile phone 10, and the area at which the user gazes belongs to the area in which the tablet 20 is located, the tablet 20 may prompt the user on the tablet 20. In this way, the user can directly switch the focus of the keyboard 30 from the mobile phone 10 to the tablet 20 through the keyboard 30 based on the prompt on the tablet 20. The operation is simple, so that user experience can be improved.

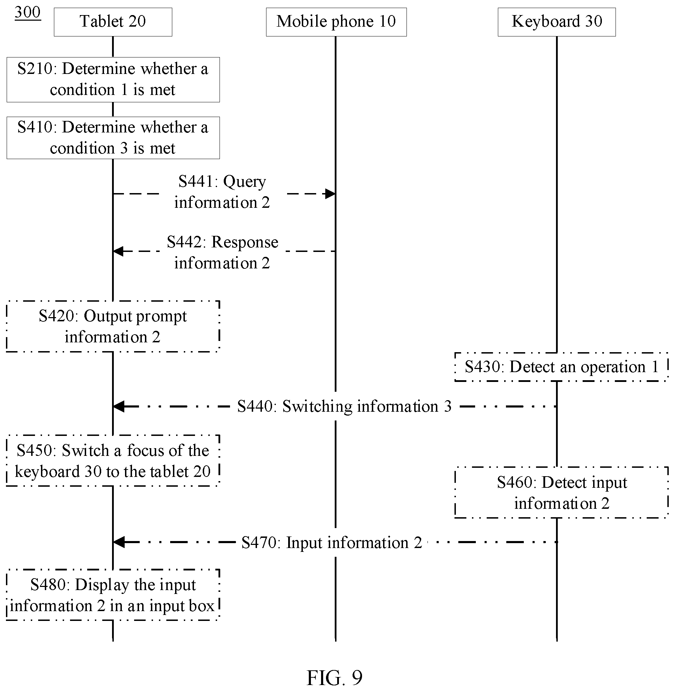

The following separately describes, with reference to FIG. 8 and FIG. 9, a cross-device focus switching method provided in embodiments of this application. The method may be applied to the application scenario 300.

FIG. 8 shows a cross-device focus switching method 200 according to an embodiment of this application.

As shown in FIG. 8, the method 200 includes S210 to S350. The following describes S210 to S350 in detail.

It should be understood that the method 200 shown in FIG. 8 does not necessarily include all steps of S210 to S350. A relationship between these steps S210 to S350 is described in detail below, and details are not described herein.

S210: A tablet 20 determines whether a condition 1 is met.

The condition 1 includes: The tablet 20 is connected to a keyboard 30, and the tablet 20 is connected to a mobile phone 10, or a same account is logged in to the tablet 20 and the mobile phone 10.

The tablet 20 may be connected to the keyboard 30 in a wired manner, or may be connected to the keyboard 30 in a wireless manner. This is not limited in this embodiment of this application.

The account in this embodiment of this application may be a system account, or may be a third-party account (for example, a login account of an application). This is not limited in this embodiment of this application.

Optionally, in some embodiments, the condition 1 may further include: A distance between the tablet 20 and the mobile phone 10 is less than or equal to a fifth threshold (for example, the fifth threshold may be 40 cm).

For example, the tablet 20 may detect a signal sent by the mobile phone 10, and determine, based on the signal sent by the mobile phone 10, whether a distance between the tablet 20 and a target device is less than or equal to the fifth threshold.

For example, the tablet 20 may send a sounding signal to the mobile phone 10; and after receiving the sounding signal, the mobile phone 10 sends a response signal to the tablet 20. In this way, after receiving the response signal sent by the mobile phone 10, the tablet 20 determines, based on strength of the response signal, whether the distance between the tablet 20 and the target device is less than or equal to the fifth threshold.

A quantity of target devices is not limited in this embodiment of this application. For ease of description, the following describes the method 200 by using an example in which the target device is the mobile phone 10.

When the tablet 20 determines that the condition 1 is not met, the tablet 20 does not perform any step. When the tablet 20 determines that the condition 1 is met, the tablet 20 performs S230.

Optionally, in some embodiments, the tablet 20 may further determine, in S220, whether to perform S230.

S220: The tablet 20 determines whether the mobile phone 10 meets a condition 2.

The condition 2 includes at least one of the following: An input box is displayed on the mobile phone 10, an input box is displayed at a bottom of a display interface of the mobile phone 10, or a display interface of the mobile phone 10 is a display interface of a target application. The target application may include a chat application, a search application (for example, a browser application), an office application, a learning application, and the like.

When the condition 2 includes at least two of the following: The input box is displayed on the mobile phone 10, the input box is displayed at the bottom of the display interface of the mobile phone 10, or the display interface of the mobile phone 10 is the display interface of the target application, a determining sequence of the at least two items is not limited by the tablet 20.

In an example, as shown in FIG. 8, S220 includes S221 and S222. In another example, S220 includes only S222, and does not include S221. In this case, the mobile phone 10 may periodically perform S222. The following describes S221 and S222 in detail.

S221: The tablet 20 may send query information 1 to the mobile phone 10. Correspondingly, the mobile phone 10 receives the query information 1 sent by the tablet 20. The query information 1 is used to query whether the input box is displayed on the display interface of the mobile phone 10, whether the input box is displayed at the bottom of the display interface of the mobile phone 10, or whether the display interface of the mobile phone 10 is the display interface of the target application.

For example, the mobile phone 10 may check, based on a layout (layout) on the display interface of the mobile phone 10, whether there is an input (input) control. If there is an input control in the layout on the display interface of the mobile phone 10, the display interface of the mobile phone 10 includes a text input box. If there is no input control in the layout on the display interface of the mobile phone 10, the display interface of the mobile phone 10 does not include a text input box.

For example, the mobile phone 10 may check, based on a layout (layout) on the display interface of the mobile phone 10, whether there is an input control, and determine whether the input control is at the bottom of the display interface of the mobile phone 10. If there is an input control in the layout on the display interface of the mobile phone 10, and the input control is at the bottom of the display interface of the mobile phone 10, the display interface of the mobile phone 10 includes a text input box. If there is no input control in the layout on the display interface of the mobile phone 10, the display interface of the mobile phone 10 does not include a text input box.

For example, the mobile phone 10 may check, based on the layout (layout) on the display interface of the mobile phone 10, a name of an application corresponding to the display interface of the mobile phone 10, and determine whether the name of the application is a name of the target application. If the name of the application is not the name of the target application, the display interface of the mobile phone 10 is not the display interface of the target application. If there is no input control in the layout on the display interface of the mobile phone 10, the display interface of the mobile phone 10 is the display interface of the target application.

S222: The mobile phone 10 sends response information 1 to the tablet 20. Correspondingly, the tablet 20 receives the response information 1 sent by the mobile phone 10. The response information 1 indicates whether the input box is displayed on the display interface of the mobile phone 10, whether the input box is displayed at the bottom of the display interface of the mobile phone 10, or whether the display interface of the mobile phone 10 is the display interface of the target application.

When the response information 1 indicates that no input box is displayed on the display interface of the mobile phone 10, no input box is displayed at the bottom of the display interface of the mobile phone 10, or the display interface of the mobile phone 10 is not the display interface of the target application, the tablet 20 determines not to perform S230. When the response information 1 indicates that the input box is displayed on the display interface of the mobile phone 10, the input box is displayed at the bottom of the display interface of the mobile phone 10, or the display interface of the mobile phone 10 is the display interface of the target application, the tablet 20 determines to perform S230.

When the tablet 20 meets the condition 2, the tablet 20 performs S230, to be specific, the tablet 20 obtains a line of sight of a user. In this way, power consumption of the tablet 20 can be reduced.

S230: The tablet 20 obtains the line of sight of the user.

In an example, if a camera is disposed on the tablet 20, the tablet 20 may enable the camera, collect an image of the user through the camera, and obtain the line of sight of the user based on the collected image of the user.

For example, first, the tablet 20 may obtain a location of a pupil of the user based on the collected image of the user. Then, the tablet 20 obtains a direction of the pupil of the user based on the location of the pupil of the user. Finally, the tablet 20 obtains the line of sight of the user based on the direction of the pupil of the user.

In another example, the tablet 20 may alternatively obtain an image of the user from another device that can collect the image of the user, and obtain the line of sight of the user based on the obtained image of the user.

For example, a camera is disposed on the mobile phone 10, and the mobile phone 10 may enable the camera, collect the image of the user through the camera of the mobile phone 10, and transmit the collected image of the user to the tablet 20, so that the tablet 20 obtains the line of sight of the user based on the image, of the user, collected by the mobile phone 10.

S240: The tablet 20 determines that the line of sight of the user is not on the tablet 20.

For example, if there is an intersection point between the line of sight, of the user, obtained in S230 and an extension surface of a screen of the tablet 20, the tablet 20 determines that the line of sight of the user is not on the tablet 20.

For example, if there is an intersection point between the line of sight of the user and an extension surface that extends leftward/rightward/upward/downward of the screen of the tablet 20, the line of sight of the user is not on the tablet 20, and the line of sight of the user is looking at a left/right/upper/lower side of the screen of the tablet 20.

S250: The tablet 20 determines whether the line of sight of the user is on the mobile phone 10.

For example, the tablet 20 may first determine a location of the mobile phone 10 relative to the tablet 20. Then, when the line of sight of the user is consistent with the location of the mobile phone 10 relative to the tablet 20, the tablet 20 may determine that the line of sight of the user is on the mobile phone 10. When the line of sight of the user is inconsistent with the location of the mobile phone 10 relative to the tablet 20, the tablet 20 may determine that the line of sight of the user is not on the mobile phone 10.

That the line of sight of the user is consistent with the location of the mobile phone 10 relative to the tablet 20 may be understood as follows: The mobile phone 10 is on a left/right/upper/lower side of the tablet 20, and the line of sight of the user is looking at the left/right/upper/lower side of the screen of the tablet 20.

In an example, the tablet 20 may detect the signal sent by the mobile phone 10, and determine the location of the mobile phone 10 relative to the tablet 20 based on the signal sent by the mobile phone 10.

For example, if a microphone is disposed at a left or right location of the tablet 20, when the left/right microphone of the tablet 20 first detects the signal sent by the mobile phone 10, the tablet 20 may determine that the mobile phone 10 is on the left/right side of the tablet 20.

For another example, if a microphone is disposed at an upper/lower location of the tablet 20, when the upper/lower microphone of the tablet 20 first detects the signal sent by the mobile phone 10, the tablet 20 may determine that the mobile phone 10 is on the upper/lower side of the tablet 20.

In another example, if the user sets the location of the mobile phone 10 relative to the tablet 20 through the tablet 20, the tablet 20 may obtain the location of the mobile phone 10 relative to the tablet 20 by using the setting of the user.

Optionally, in some embodiments, in a process of performing S250 by the tablet 20, not only the line of sight of the user and the location of the mobile phone 10 relative to the tablet 20 need to be considered, but also whether the line of sight of the user is within a target range relative to the tablet 20 needs to be considered. When the line of sight of the user is consistent with the location of the mobile phone 10 relative to the tablet 20, and the line of sight of the user is within the target range relative to the tablet 20, the tablet 20 may determine that the line of sight of the user is on the mobile phone 10.

For example, the target range may be understood as that an included angle between the line of sight and a normal line of the tablet 20 is less than or equal to a target angle. For example, the target angle may be 30°, 45°, or the like.

If the tablet 20 determines that the line of sight of the user is not on the mobile phone 10, the tablet 20 does not need to perform S260. In this case, the method 200 includes only S210 to S250.

If the tablet 20 determines that the line of sight of the user is on the mobile phone 10, the tablet 20 needs to perform S260.

S260: The tablet 20 determines whether a focus of the keyboard 30 is on the tablet 20 or the mobile phone 10.

If the tablet 20 determines that the focus of the keyboard 30 is not on the tablet 20 but on the mobile phone 10, because the line of sight of the user is also on the mobile phone 10, the tablet 20 does not need to switch the focus of the keyboard 30, that is, the tablet does not need to perform S270. In this case, the method 200 includes only S210 to S260.

If the tablet 20 determines that the focus of the keyboard 30 is on the tablet 20 but not on the mobile phone 10, because the line of sight of the user is on the mobile phone 10 in this case, the tablet 20 needs to switch the focus of the keyboard 30 to the mobile phone 10 on which the line of sight of the user is located, that is, the tablet 20 needs to perform S270.

Optionally, before S270, if the tablet 20 has determined that the mobile phone 10 displays the input box, the tablet 20 may directly perform S270 after S260. Before S270, if the tablet 20 does not determine whether the mobile phone 10 displays the input box, after S260, the tablet 20 needs to determine whether the mobile phone 10 displays the input box, and performs S270 only when the mobile phone 10 displays the input box.

For how the tablet 20 determines whether the mobile phone 10 displays the input box, refer to the related descriptions of S221 and S222, and details are not described herein again.

S270: The tablet 20 sends indication information 1 to the mobile phone 10. Correspondingly, the mobile phone 10 receives the indication information 1 from the tablet 20.

The indication information 1 indicates that an input on the keyboard 30 may be switched to the text input box of the mobile phone 10.

S280: The mobile phone 10 outputs prompt information 1.

The prompt information 1 indicates that the user can switch the focus of the keyboard 30 to the text input box of the mobile phone 10.

For example, the mobile phone 10 may display the prompt information 1 or play the prompt information 1.

A specific display form and a display location of the prompt information 1 are not limited in this embodiment of this application.

In an example, the prompt information 1 may only indicate that the user can switch the focus of the keyboard 30 to the text input box of the mobile phone 10.

For example, as shown in FIG. 4(b), the prompt information 1 may include the icon 1017 and the cursor 1018. The icon 1017 is displayed near the text input box 1014, and the cursor 1018 is displayed in the text input box 1014.

For another example, as shown in FIG. 5(b), the prompt information 1 may include the icon 1113 and the cursor 1114. The icon 1113 is displayed near the website address input box 1111, and the cursor 1114 is displayed in the website address input box 1111.

In another example, the prompt information 1 may indicate that when an operation 1 is input on the keyboard 30, the focus of the keyboard 30 can be switched to the text input box of the mobile phone 10.

For example, as shown in FIG. 4(b), the prompt information 1 may include the icon 1017, the text information "press Enter to input", and the cursor 1018. The icon 1017 and the text information "press Enter to input" are displayed near the text input box 1014, and the cursor 1018 is displayed in the text input box 1014.

For another example, as shown in FIG. 5(b), the prompt information 1 may include the icon 1113, the text information "press Enter to input", and the cursor 1114. The icon 1113 and the text information "press Enter to input" are displayed near the website address input box 1111, and the cursor 1114 is displayed in the website address input box 1111.

After the user sees the prompt information 1 on the mobile phone 10, the user may perform the operation 1 on the keyboard 30, so that the focus of the keyboard 30 can be switched to the text input box of the mobile phone 10. In this case, the keyboard 30 performs S290.

S290: The keyboard 30 detects the operation 1.

When the keyboard 30 does not detect the operation 1, the keyboard 30 does not perform S300. When the keyboard 30 detects the operation 1, the keyboard 30 performs S300.

S300: The keyboard 30 sends switching information 1 to the tablet 20. Correspondingly, the tablet 20 receives the switching information 1 from the keyboard 30.

The switching information 1 indicates that the focus of the keyboard 30 is switched to the text input box of the mobile phone 10.

S310: The tablet 20 switches the focus of the keyboard 30 to the mobile phone 10.

For example, the tablet 20 may make the text input box on the tablet 20 to be in a state in which the focus of the keyboard 30 is lost, and indicate the mobile phone 10 to make the text input box of the mobile phone 10 to be in a state in which the focus of the keyboard 30 is obtained.

After S310, the user may input information in the text input box of the mobile phone 10 through the keyboard 30. In this case, the input information is still first transmitted to the tablet 20, and then the tablet 20 transmits the input information to the mobile phone 10, so that the mobile phone 10 displays the input information.

Optionally, in some embodiments, after S310, the mobile phone 10 may further display prompt information 2, and the prompt information 2 indicates that the user can input the information in the text input box of the mobile phone 10 through the keyboard 30.

For example, the mobile phone 10 may display the prompt information 2 or play the prompt information 2.

A specific display form and a display location of the prompt information 2 are not limited in this embodiment of this application.

For example, as shown in FIG. 4(c), the prompt information 2 includes the icon 1019, the text information "inputting...", and the cursor 1020. In this case, the icon 1019 and the text information "inputting..." are displayed near the text input box 1014, and the cursor 1020 is displayed in the text input box 1014.

For another example, as shown in FIG. 5(d), the prompt information 2 includes the icon 1115, the text information "inputting...", and the cursor 1116. The icon 1115 and the text information "inputting..." are displayed near the search term input box 1112, and the cursor 1116 is displayed in the search term input box 1112.

Optionally, in some embodiments, the keyboard 30 may further perform S320.

S320: The keyboard 30 detects input information 1 of the user.

When the keyboard 30 does not detect the input information 1 of the user, the keyboard 30 does not perform S330. When the keyboard 30 detects the input information 1 of the user, the keyboard 30 performs S330.

S330: The keyboard 30 sends the input information 1 to the tablet 20. Correspondingly, the tablet 20 receives the input information 1 from the keyboard 30.

After the tablet 20 receives the input information 1, the tablet 20 performs S340.

S340: The tablet 20 sends the input information 1 to the mobile phone 10. Correspondingly, the mobile phone 10 receives the input information 1 from the tablet 20.

S350: The mobile phone 10 displays the input information 1 in the input box.

Optionally, in some embodiments, after S350, if the tablet 20 determines that there is no input box on the display interface of the mobile phone 10, the tablet 20 may re-switch the focus of the keyboard 30 to the tablet 20. In this way, the user can re-input the information on the tablet 30 through the keyboard 30.

Optionally, in some embodiments, if the mobile phone 10 displays a plurality of input boxes, the prompt information 1 in S280 indicates that the user can switch the focus of the keyboard 30 to the input box near the prompt information 1. The user may switch, through the keyboard 30, a specific input box, of the mobile phone 10, to which the user wants to switch the focus of the keyboard 30. In this case, between S280 and S290, the user may perform an operation 2 (for example, after pressing a Tab key) on the keyboard 30. In this way, after detecting the operation 2, the keyboard 30 may adjust, to a next input box through the tablet 20, a location of the prompt information 1 displayed on the mobile phone 10. Then, the user performs the operation 1 on the keyboard 30, so that the focus of the keyboard 30 can be switched to the next input box of the mobile phone 10. In this case, the switching information 1 in S300 may be replaced with switching information 2. In S310, the tablet 20 switches the focus of the keyboard 30 to the next input box of the mobile phone 10, and the input box in S350 is the next input box of the mobile phone 10. The switching information 2 indicates that the focus of the keyboard 30 is switched to the next input box of the mobile phone 10.

For example, as shown in FIG. 5(b), the input box displayed on the mobile phone 10 includes the website address input box 1111 and the search term input box 1112, and the prompt information 1 is first displayed near the website address input box 1111. In this case, the prompt information 1 indicates that the user can switch the focus of the keyboard 30 to the website address input box 1111 of the mobile phone 10. If the user does not want to switch the focus of the keyboard 30 to the website address input box 1111 of the mobile phone 10, but wants to switch the focus of the keyboard 30 to the search term input box 1112 of the mobile phone 10, the user may perform the operation 2 (for example, after pressing the Tab key) on the keyboard 30. In this way, after detecting the operation 2, the keyboard 30 may adjust, through the tablet 20, the location of the prompt information 1 displayed on the mobile phone 10 to be near the search term input box 1112. In this case, the prompt information 1 indicates that the user can switch the focus of the keyboard 30 to the search term input box 1112 of the mobile phone 10.

The user previously inputs the information on the tablet 20 through the keyboard 30. If the input box is displayed on the mobile phone 10, and the user wants to input the information in the input box of the mobile phone 10 through the keyboard 30, the user may move the line of sight to the mobile phone 10. In this way, according to the method 200, when the tablet 20 determines that the line of sight of the user is on the mobile phone 10, and the focus of the keyboard 30 is on the tablet 20, the mobile phone 10 may output the prompt information, and the user may switch, through the keyboard 30 based on the prompt information, the focus of the keyboard 30 to the input box of the mobile phone 10 on which the line of sight of the user is located. Then, the user may input the information in the input box of the mobile phone 10 through the keyboard 30. In this case, the screen of the mobile phone 10 may be considered as an extension screen of the tablet 20, that is, the information input by the user through the keyboard 30 is transmitted to the mobile phone 10 through the tablet 20. In this way, the operation of the user is simple, and user experience is improved.

In addition, when the plurality of input boxes are displayed on the mobile phone 10, the user may further switch, through the keyboard 30, the focus of the keyboard 30 to the input box of the mobile phone 10 for adjustment. In this way, the operation of the user is simple, and user experience is further improved.

FIG. 9 shows a cross-device focus switching method 300 according to an embodiment of this application.

As shown in FIG. 9, the method 300 includes S210, S230, and S410 to S480. For S210 and S230, refer to the related descriptions in FIG. 8. Details are not described herein again. The method 300 may include S230 and S410, or may not include S230 and S410, in other words, S230 and S410 are optional steps. The following describes S410 to S480 in detail.

It should be understood that the method 300 shown in FIG. 9 does not necessarily include all steps of S210, S230, and S410 to S480. A relationship between these steps S210, S230, and S410 to S480 is described in detail below, and details are not described herein.

S410: A tablet 20 determines whether a condition 3 is met.

In an example, the condition 3 includes: A focus of a keyboard 30 is on a mobile phone 10, and a line of sight of a user is on the tablet 20.

In this example, for example, the tablet 20 may perform S230 in FIG. 8, and determine, based on the line of sight, of the user, obtained in S230, whether the line of sight of the user is on the tablet 20.

If there is an intersection point between the line of sight, of the user, obtained in S230 and an extension surface of a screen of the tablet 20, the tablet 20 determines that the line of sight of the user is not on the tablet 20. In this case, the tablet 20 does not perform S420.

If there is an intersection point between the line of sight, of the user, obtained in S230 and a screen of the tablet 20, the tablet 20 determines that the line of sight of the user is on the tablet 20. In this case, the tablet 20 needs to perform S420.

In another example, the condition 3 includes: The focus of the keyboard 30 is on the mobile phone 10, and no input box is displayed on the mobile phone 10.

In this example, S420 may include S421 and S422 shown in FIG. 9; or S420 may not include S422 shown in FIG. 9 or not include S421 shown in FIG. 9. In this case, the mobile phone 10 may periodically perform S442. The following describes S421 and S422 in detail.

S421: The tablet 20 may send query information 2 to the mobile phone 10. Correspondingly, the mobile phone 10 receives the query information 2 sent by the tablet 20. The query information 2 is used to query whether a display interface of the mobile phone 10 includes the input box.

For an example of how the mobile phone 10 determines whether the display interface of the mobile phone 10 includes the input box, refer to the related descriptions in S221, and details are not described herein again.

S422: The mobile phone 10 sends response information 2 to the tablet 20. Correspondingly, the tablet 20 receives the response information 2 sent by the mobile phone 10. The response information 2 indicates whether the display interface of the mobile phone 10 includes a text input box.

When the response information 2 indicates that the display interface of the mobile phone 10 includes the text input box, the tablet 20 determines not to perform S420. When the response information 2 indicates that the display interface of the mobile phone 10 does not include the text input box, the tablet 20 determines to perform S420.

S420: The tablet 20 outputs prompt information 2.

The prompt information 2 indicates that the user can switch the focus of the keyboard 30 to the tablet 20.

For example, the tablet 20 may display the prompt information 2 or play the prompt information 2.

A specific display form and a display location of the prompt information 2 are not limited in this embodiment of this application.

In an example, the prompt information 2 may only indicate that the user can switch the focus of the keyboard 30 to the tablet 20.

For example, as shown in FIG. 6(b), the prompt information 2 includes the icon 2111, and the prompt information 2 is displayed near the text information "XXX".

For another example, as shown in FIG. 7(b), the prompt information 2 includes the icon 2213, and the prompt information 2 is displayed near the website address input box 2211.

In another example, the prompt information 2 may indicate that when an operation 1 is input on the keyboard 30, the focus of the keyboard 30 can be switched to the tablet 20.

For example, as shown in FIG. 6(b), the prompt information 2 includes the icon 2111 and the text information "press Enter to input", and the prompt information 2 is displayed near the text information "XXX".

For another example, as shown in FIG. 7(b), the prompt information 2 includes the icon 2213 and the text information "press Enter to input", and the prompt information 2 is displayed near the website address input box 2211.

After the user sees the prompt information 2 on the tablet 20, the user may perform the operation 1 on the keyboard 30, so that the focus of the keyboard 30 can be switched to a text of the tablet 20. In this case, the keyboard 30 performs S430.

S430: The keyboard 30 detects the operation 1.

When the keyboard 30 does not detect the operation 1, the keyboard 30 does not perform S440. When the keyboard 30 detects the operation 1, the keyboard 30 performs S440.

S440: The keyboard 30 sends switching information 3 to the tablet 20. Correspondingly, the tablet 20 receives the switching information 3 from the keyboard 30.

The switching information 3 indicates that the focus of the keyboard 30 is switched to the tablet 20.

S450: The tablet 20 switches the focus of the keyboard 30 to the tablet 20.

For example, the tablet 20 may indicate the mobile phone 10 to make the text input box of the mobile phone 10 to be in a state in which the focus of the keyboard 30 is lost, and make the text input box of the tablet 20 to be in a state in which the focus of the keyboard 30 is obtained.

After S450, the user may input information in the text input box of the tablet 20 through the keyboard 30.

Optionally, in some embodiments, after S450, the tablet 20 may further display prompt information 4, and the prompt information 4 indicates that the user can input the information on the tablet 20 through the keyboard 30.

For example, the tablet 20 may display the prompt information 4 or play the prompt information 4.

A specific display form and a display location of the prompt information 4 are not limited in this embodiment of this application.

For example, as shown in FIG. 6(c), the prompt information 4 includes the icon 2112 and the text information "inputting...", and the prompt information 4 is displayed at any location on the tablet 20.

For another example, as shown in FIG. 7(d), the prompt information 4 includes the icon 2214 and the text information "inputting...", and the prompt information 4 is displayed near the search input box 2215.

Optionally, in some embodiments, the keyboard 30 may further perform S460.

S460: The keyboard 30 detects input information 2 of the user.

When the keyboard 30 does not detect the input information 2 of the user, the keyboard 30 does not perform S470. When the keyboard 30 detects the input information 2 of the user, the keyboard 30 performs S470.

S470: The keyboard 30 sends the input information 2 to the tablet 20. Correspondingly, the tablet 20 receives the input information 2 from the keyboard 30.

After the tablet 20 receives the input information 2, the tablet 20 performs S480.

S480: The tablet 20 displays the input information 2 in the input box.

Optionally, in some embodiments, if the tablet 20 displays a plurality of input boxes, the prompt information 2 in S420 indicates that the user can switch the focus of the keyboard 30 to the input box near the prompt information 2 of the tablet 20. The user may switch, through the keyboard 30, a specific input box, of the tablet 20, to which the user wants to switch the focus of the keyboard 30. In this case, between S420 and S430, the user may perform an operation 2 (for example, after pressing a Tab key) on the keyboard 30. In this way, after detecting the operation 2, the keyboard 30 may adjust, to a next input box, a location of the prompt information 2 displayed on the tablet 20. Then, the user performs the operation 1 on the keyboard 30, so that the focus of the keyboard 30 can be switched to the next input box of the tablet 20. In this case, the switching information 3 in S440 may be replaced with switching information 4. In S450, the tablet 20 switches the focus of the keyboard 30 to the next input box of the tablet 20, and the input box in S480 is the next input box of the tablet 20. The switching information 4 indicates that the focus of the keyboard 30 is switched to the next input box of the tablet 20.

For example, as shown in FIG. 7(b), the input box displayed on the tablet 20 includes the website address input box 2211 and the search term input box 2212, and the prompt information 2 is first displayed near the website address input box 2211. In this case, the prompt information 2 indicates that the user can switch the focus of the keyboard 30 to the website address input box 2211 of the tablet 20. If the user does not want to switch the focus of the keyboard 30 to the website address input box 2211 of the tablet 20, but wants to switch the focus of the keyboard 30 to the search term input box 2212 of the tablet 20, the user may perform the operation 2 (for example, after pressing the Tab key) on the keyboard 30. In this way, after detecting the operation 2, the keyboard 30 may adjust the location of prompt information 2 displayed on the tablet 20 to the search term input box 2212. In this case, the prompt information 2 indicates that the user can switch the focus of the keyboard 30 to the search term input box 2212 of the tablet 20.

The user previously inputs the information on the mobile phone 10 through the keyboard 30. If the user wants to input the information on the tablet 20 through the keyboard 30, the user may move the line of sight to the tablet 20, or may not move the line of sight to the tablet 20. In this way, according to the method 300, when the tablet 20 determines that there is no input box on the mobile phone 10, and the focus of the keyboard 30 is on the mobile phone 10, the tablet 20 may output the prompt information 2. In this case, because the keyboard 30 is always connected to the tablet 20, that is, the keyboard 30 mainly serves the tablet 20, when the tablet 20 determines that the line of sight of the user is on the tablet 20, and the focus of the keyboard 30 is on the mobile phone 10, the tablet 20 does not need to determine whether the input box is displayed, and directly outputs the prompt information 2. The user may switch, through the keyboard 30 based on the prompt information 2, the focus of the keyboard 30 to the tablet 20 on which the line of sight of the user is located. Then, the user may input the information in the input box of the tablet 20 through the keyboard 30. In this case, the screen of the mobile phone 10 is no longer considered as an extension screen of the tablet 20. In this way, the operation of the user is simple, and user experience is improved.

In addition, when the plurality of input boxes are displayed on the tablet 20, the user may further switch, through the keyboard 30, the focus of the keyboard 30 to the input box of the tablet 20 for adjustment. In this way, the operation of the user is simple, and user experience is further improved.

It should be noted that, regardless of the method 200 shown in FIG. 8 or the method 300 shown in FIG. 9, when a same account is logged in to the tablet 20 and the mobile phone 10, the tablet 20 and the mobile phone 10 may transmit information (for example, the query information 1, the response information 1, the indication information 1, and the input information 1 described above) through the cloud. When the tablet 20 is connected to the mobile phone 10, the tablet 20 and the mobile phone 10 may transmit the information (for example, the query information 1, the response information 1, the indication information 1, and the input information 1 described above) in a manner of establishing a connection between the tablet 20 and the mobile phone 10.

In addition, the focus of the keyboard 30 in FIG. 4(a) to FIG. 4(c) to FIG. 9 may be understood as a location at which the information input by the user through the keyboard 30 is displayed. For example, the focus of the keyboard 30 is on the tablet 20. In other words, the user can input the information on the tablet 20 through the keyboard 30. For another example, the focus of the keyboard 30 is in the text input box 1014 of the mobile phone 10. In other words, the user may input the information in the text input box 1014 of the mobile phone 10 through the keyboard 30.

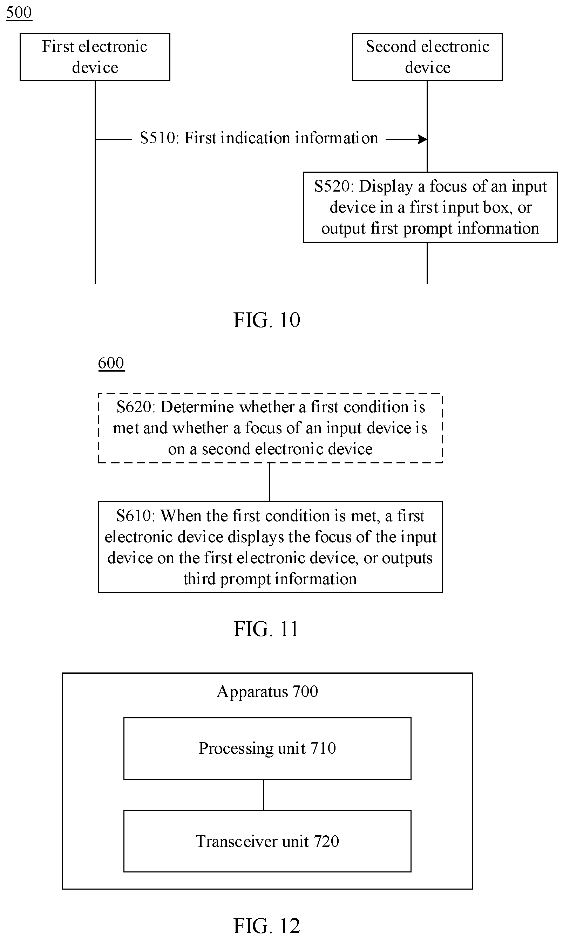

The following describes, with reference to FIG. 10 and FIG. 11, a cross-device focus switching method provided in embodiments of this application.

The cross-device focus switching method shown in FIG. 10 and FIG. 11 may be applied to a system including an input device, a first electronic device, and a second electronic device.

The input device is connected to the first electronic device. The input device may be connected to the first electronic device in a wired manner, or may be connected to the first electronic device in a wireless manner. This is not limited in this embodiment of this application.

The first electronic device is connected to the second electronic device, and/or a same account is logged in to the first electronic device and the second electronic device.

A type of the same account logged in to the first electronic device and the second electronic device may be a system account, or may be a third-party account (for example, a login account of an application). This is not limited in this embodiment of this application.

For example, the input device may be the keyboard 30 shown in FIG. 3 to FIG. 9, the first electronic device may be the tablet 20 shown in FIG. 3 to FIG. 9, and the second electronic device may be the mobile phone 10 shown in FIG. 3 to FIG. 9.

For another example, the input device may be a keyboard, the first electronic device may be a computer, and the second electronic device may be a mobile phone.

Optionally, a distance between the first electronic device and the second electronic device may be less than or equal to a fifth threshold.

FIG. 10 is a schematic flowchart of an example of a cross-device focus switching method 500 according to an embodiment of this application.

As shown in FIG. 10, the method 500 includes S510 and S520. The following describes S510 and S520 in detail.

S510: When an area at which a user gazes belongs to an area in which the second electronic device is located, and a first input box is displayed on the second electronic device, the first electronic device sends first indication information to the second electronic device. Correspondingly, the second electronic device receives the first indication information sent by the first electronic device.

A focus of the input device exists on the first electronic device, that is, the focus of the input device is on the first electronic device.

For example, the first indication information may indicate that the focus of the input device can be switched to the first input box.

Optionally, before S510, the first electronic device may perform S530.

S530: The first electronic device determines whether the area at which the user gazes belongs to the area in which the second electronic device is located, whether the first input box is displayed on the second electronic device, and whether the focus of the input device is on the first electronic device.

In this embodiment of this application, a sequence in which the first electronic device determines whether the area at which the user gazes belongs to the area in which the second electronic device is located, whether the first input box is displayed on the second electronic device, and whether the focus of the input device is on the first electronic device is not limited.

For example, the first electronic device may first determine whether the first input box is displayed on the second electronic device, determine the area at which the user gazes, and then determine whether the focus of the input device is on the first electronic device. In this way, power consumption of the first electronic device can be reduced.

In an example, the first electronic device may actively obtain, from the second electronic device, whether the second electronic device has the first input box.

Specifically, that the first electronic device determines that the first input box is displayed on the second electronic device may include S531a to S533a. The following describes S531a to S533a in detail.

S531a: The first electronic device sends first query information to the second electronic device. Correspondingly, the second electronic device receives the first query information from the first electronic device.

The first query information is used to query whether the first input box is displayed on the second electronic device.

After receiving the first query information, the second electronic device determines whether the first input box is displayed on the second electronic device; and when the first input box is displayed on the second electronic device, performs S532a. For a solution of how the second electronic device determines whether the first input box is displayed on the second electronic device, refer to the related descriptions of determining, by the tablet 20 in S221 in FIG. 8, whether the text input box is displayed on the tablet 20, and details are not described herein again.

S532a: The second electronic device sends first confirmation information to the first electronic device in response to the first query information. Correspondingly, the first electronic device receives the first confirmation information from the second electronic device.

The first confirmation information indicates that the first input box is displayed on the second electronic device.

S533a: The first electronic device determines, in response to the first confirmation information, that the first input box is displayed on the second electronic device.

In another example, the second electronic device may actively send, to the first electronic device, whether the second electronic device has the first input box. That is, the first electronic device may passively obtain, from the second electronic device, whether the second electronic device has the first input box.

Specifically, that the first electronic device determines that the first input box is displayed on the second electronic device may include S531b and S532b. The following describes S531a and S532b in detail.

S531b: When the second electronic device determines that the first input box is displayed on the second electronic device, the second electronic device sends the first confirmation information to the first electronic device. Correspondingly, the first electronic device receives the first confirmation information from the second electronic device.

For descriptions of the first confirmation information, refer to the related descriptions in S532a. Details are not described herein again.

S532b: The first electronic device determines, in response to the first confirmation information, that the first input box is displayed on the second electronic device.

For example, if a camera is disposed on the first electronic device, the first electronic device may collect an image of the user through the camera, and determine a line of sight of the user based on the collected image of the user. When there is an intersection point between the line of sight of the user and an extension surface, along a first direction (for example, leftward/rightward/upward/downward), of the first electronic device, and the second electronic device is located in the first direction of the first electronic device, the area at which the user gazes belongs to the area in which the second electronic device is located. When there is an intersection point between the line of sight of the user and the first electronic device, the area at which the user gazes does not belong to the area in which the second electronic device is located, but belongs to an area in which the first electronic device. For a solution of determining the line of sight of the user based on the image of the user, refer to the related descriptions of determining, by the tablet 20 based on the image of the user, the area at which the user gazes in FIG. 8 and FIG. 9. Details are not described herein again.

For example, in some embodiments, only when determining that the second electronic device meets a second condition, the first electronic device can determine the area at which the user gazes. In this way, only when the second electronic device meets the second condition, the first electronic device enables the camera, collects the image of the user, and determines, based on the collected image of the user, the area at which the user gazes, so that power consumption of the first electronic device can be reduced.

The second condition includes at least one of the following: The first input box is displayed on the second electronic device, the second electronic device displays a display interface of a target application, and the first input box is displayed on the second electronic device and the first input box is located at a bottom of the display interface of the second electronic device.

In an example, the first electronic device may actively obtain, from the second electronic device, whether the second electronic device meets the second condition.

Specifically, that the first electronic device determines that the area at which the user gazes belongs to the area in which the second electronic device is located may include: The first electronic device sends second query information to the second electronic device, where the second query information indicates whether the second electronic device meets the second condition; the second electronic device determines, in response to the second query information, that the second electronic device meets the second condition, and sends second determining information to the first electronic device, where the second confirmation information indicates that the second electronic device meets the second condition; and the first electronic device collects the image of the user in response to the second confirmation information, and determines, based on the image, that the area at which the user gazes belongs to the area in which the second electronic device is located.

The target application includes but is not limited to: a chat application, a search application (for example, a browser application), an office application, a learning application, and the like.

In another example, the second electronic device may actively send, to the first electronic device, whether the second electronic device meets the second condition. That is, the first electronic device may passively obtain, from the second electronic device, that the second electronic device meets the second condition.

Optionally, when the focus of the input device is on the first electronic device, the first electronic device may further output fourth prompt information, where the fourth prompt information indicates that the focus of the input device is on the first electronic device.

For example, the first electronic device may display the fourth prompt information or play the fourth prompt information.

For example, the fourth prompt information may include at least one of the following: a fourth cursor, a fourth icon, fourth text information, and a fourth outer box. The fourth cursor is displayed at a location, on the first electronic device, at which a text is to be input, the fourth icon indicates the input device, the fourth text information indicates that the user can input information on the first electronic device, and the fourth outer box surrounds an input box, displayed on the first electronic device, in which the text is being input.

For example, the fourth cursor may be the cursor 2011 shown in FIG. 4(a) or FIG. 5(a), the fourth icon may be the icon 2012 shown in FIG. 4(a) or FIG. 5(a), and the fourth text information may be the text information "inputting..." shown in FIG. 4(a) or FIG. 5(a).

For descriptions of the fourth cursor, the fourth icon, and the fourth text information, respectively refer to the related descriptions of the cursor 2011, the icon 2012, and the text information of "inputting..." in FIG. 4(a) or FIG. 5(a). Details are not described herein again.

It should be noted that, if the fourth prompt information includes the fourth icon and the fourth text information, the fourth prompt information further indicates the input device.

S520: After receiving the first indication information, the second electronic device displays the focus of the input device in the first input box, or outputs first prompt information.

The first prompt information prompts the user that the focus of the input device can be switched to the first input box.

For example, the second electronic device may display the first prompt information or play the first prompt information.

For example, the first prompt information may include at least one of the following: a first cursor, a first icon, first text information, and a first outer box. The first cursor is displayed at a location, on the second electronic device, at which the focus of the input device is to be switched, the first icon indicates a device (namely, the input device) used to switch the focus of the input device, the first text information indicates a first operation, and the first outer box surrounds an input box, on the second electronic device, in which the focus of the input device is to be switched.

For example, the first cursor may be the cursor 1018 shown in FIG. 4(b), the first icon may be the icon 1017 shown in FIG. 4(b), and the first text information may be the text information "press Enter to input" shown in FIG. 4(b).

For another example, the first cursor may be the cursor 1114 shown in FIG. 5(b), the first icon may be the icon 1113 shown in FIG. 5(b), and the first text information may be the text information "press Enter to input" shown in FIG. 5(b).

For descriptions of the first cursor, the first icon, and the first text information, respectively refer to the related descriptions of the cursor 1018, the icon 1017, and the text information "press Enter to input" in FIG. 4(a); or for descriptions of the first cursor, the first icon, and the first text information, respectively refer to the related descriptions of the cursor 1114, the icon 1113, and the text information "press Enter to input" in FIG. 5(a). Details are not described herein again.

It should be noted that, if the first prompt information includes the first icon and the first text information, the first prompt information further prompts the user to input the first operation on the input device, so that the focus of the input device can be switched to the first input box.

In an example, if only one input box (namely, the first input box) is displayed on the second electronic device, when the second electronic device outputs the first prompt information in S520, the first prompt information may prompt the user that the focus of the input device can be switched to the first input box, the first prompt information is displayed at a first target location, and a distance between the first target location and the first input box is less than or equal to a first threshold. In other words, the first prompt information is displayed near the first input box. In this way, the user can intuitively learn of the input box to which the focus of the input device is to be switched.

For example, as shown in FIG. 4(b), the first prompt information is displayed near the text input box 1014 (an example of the first target location).

In another example, if a plurality of input boxes are displayed on the second electronic device, for example, the plurality of input boxes include a first input box and a second input box, the first prompt information is displayed at a second target location, and a distance between the second target location and the second input box is less than or equal to a second threshold. In other words, the first prompt information is displayed near the second input box. In this way, the user can intuitively learn of the input box to which the focus of the input device is to be switched. If the user wants to adjust the input box, on the second electronic device, to which the focus of the input device is to be switched, the user may perform a second operation on the input device. In this way, the input device sends first switching information to the first electronic device in response to detecting the second operation, where the first switching information indicates to adjust a display location of the first prompt information from the second target location to a first target location; the first electronic device sends the first switching information to the second electronic device in response to the first switching information; and the second electronic device adjusts, in response to the first switching information, the display location of the first prompt information from the second target location to the first target location.

For example, the second operation may include an operation of pressing a Tab key.

For example, as shown in FIG. 5(b), the input box displayed on the mobile phone 10 includes the website address input box 1111 and the search term input box 1112, and the first prompt information is first displayed near the website address input box 1111. In this case, the focus of the keyboard 30 can be switched to the website address input box 1111 of the mobile phone 10. If the user does not want to switch the focus of the keyboard 30 to the website address input box 1111 of the mobile phone 10, but wants to switch the focus of the keyboard 30 to the search term input box 1112 of the mobile phone 10, the user may press the Tab key on the keyboard 30, and the keyboard 30 may adjust, through the tablet 20, the location of the first prompt information displayed on the mobile phone 10 to the search term input box 1112. In this case, the focus of the keyboard 30 can be switched to the search term input box 1112 of the mobile phone 10.

The second input box is an input box in which a focus latest input by the second electronic device is located; or the second input box is a 1^{st} input box on the display interface of the second electronic device.

For example, the second electronic device stores a location at which a focus input by the second electronic device each time is located. In this way, the second electronic device displays, by default, the first prompt information near the second input box in which a focus latest (previously) input by the second electronic device is located.

It should be understood that a 1^{st} input box on the display interface of the second electronic device may be understood as: In the input box on the display interface of the second electronic device, an input box that is closest to an upper edge and a left edge of the display interface of the second electronic device is the 1^{st} input box.

It should be noted that in S520, if the second electronic device displays the focus of the input device in the first input box, the user may input information in a first text input box through the input device. If the second electronic device outputs the first prompt information, the user cannot input the information in the first text input box through the input device.

In addition, if the first prompt information and the fourth prompt information are of a same type (for example, the first prompt information includes a first cursor, and the fourth prompt information includes a fourth cursor), display effect of the first prompt information and display effect of the fourth prompt information are different. For a specific example, refer to an example of the fourth prompt information shown in FIG. 4(a) and an example of the first prompt information shown in FIG. 4(b); or for a specific example, refer to an example of the fourth prompt information shown in FIG. 5(a) and an example of the first prompt information shown in FIG. 5(b).

For example, display effect of the first cursor and display effect of the fourth cursor are different. For another example, display effect of the first icon and display effect of the fourth icon are different. For another example, display effect of the first outer box and display effect of the fourth outer box are different.

For example, the display effect in this application may include a display color, a display size, a display form (for example, a solid line or a dashed line), highlighting, non-displaying, and the like. This is not limited in this application. FIG. 4(a) to FIG. 4(c) to FIG. 7(a) to FIG. 7(d) are merely examples of the display effect, and should not constitute a limitation on this application.

For example, in S520, if the second electronic device displays the focus of the input device in the first input box, before S520, the method 500 may further include S540 to S560; or if the second electronic device outputs the first prompt information, after S520, the method 500 may further include S540 to S560. The following describes S540 to S560 in detail.

S540: The input device sends third switching information to the first electronic device in response to detecting the first operation. Correspondingly, the first electronic device receives the third switching information from the input device.

The third switching information indicates that the focus of the input device is switched to the first input box.

For example, the first operation may be an operation of pressing an Enter key.

S550: The first electronic device controls, in response to the third switching information, the first electronic device to be in a state in which the focus of the input device is lost, and sends third indication information to the second electronic device. Correspondingly, the second electronic device receives the third indication information from the first electronic device.

For example, the third indication information may indicate that the first input box is in a state in which the focus of the input device is obtained.

It should be noted that, in this embodiment of this application, an execution sequence of the step of controlling, by the first electronic device, the first electronic device to be in the state in which the focus of the input device is lost and the step of sending, by the first electronic device, the third indication information to the second electronic device is not limited.

S560: The second electronic device controls, in response to the third indication information, the first input box of the second electronic device to be in the state in which focus of the input device is obtained.

Optionally, in some embodiments, after S550, the first electronic device may no longer display the fourth prompt information.

Optionally, in some embodiments, after S560, the first electronic device may further output second prompt information. The second prompt information indicates that the user can input the information in the first input box through the input device.

For example, the second electronic device may display the second prompt information or play the second prompt information.

For example, the second prompt information may include at least one of the following: a second cursor, a second icon, second text information, and a second outer box. The second cursor is displayed in the first input box, the second icon indicates the input device, the second text information indicates that the user can input information in the first input box, and the second outer box surrounds the first input box.

For example, the second cursor may be the cursor 1020 shown in FIG. 4(c), the second icon may be the icon 1019 shown in FIG. 4(c), and the second text information may be the text information "inputting..." shown in FIG. 4(c).

For another example, the second cursor may be the cursor 1116 shown in FIG. 5(d), the second icon may be the icon 1115 shown in FIG. 5(b), and the second text information may be the text information "inputting..." shown in FIG. 5(b).

A display location of the second prompt information and the display location of the first prompt information are the same, and display effect of the second prompt information and display effect of the first prompt information are different. If display effect of the fourth prompt information and the display effect of the first prompt information are different, the display effect of the second prompt information and the display effect of the fourth prompt information may be the same or may be different.

For example, a display location of the second cursor and a display location of the first cursor are the same, but display effect of the second cursor and display effect of the first cursor are different. For another example, a display location of the second icon and a display location of the first icon are the same, but display effect of the second icon and display effect of the first icon are different. For another example, displaying of the second outer box and displaying of the first outer box are the same, but display effect of the second outer box and display effect of the first outer box are different.

For descriptions of the second cursor, the second icon, and the second text information, respectively refer to the related descriptions of the cursor 1020, the icon 1019, and the text information "inputting..." in FIG. 4(c); or for descriptions of the second cursor, the second icon, and the second text information, respectively refer to the related descriptions of the cursor 1116, the icon 1115, and the text information "inputting..." in FIG. 5(c). Details are not described herein again.

Optionally, in some embodiments, after S560, the input device may transmit, to the second electronic device through the first electronic device, the information input by the user, so that the second electronic device displays the information on the display interface of the second electronic device. In other words, the user may input the information on the second electronic device through the input device and the first electronic device.

In this embodiment, specifically, after S560, the method 500 may further include the following steps: S570: The input device sends first input information to the first electronic device in response to obtaining the first input information of the user. S580: The first electronic device forwards the first input information to the second electronic device in response to the first input information. S590: The second electronic device is further configured to display the first input information in the first input box in response to the first input information.

Optionally, in some embodiments, before S560, if a default text is displayed in the first input box on the second electronic device, after S560, the default text is no longer displayed in the first input box on the second electronic device.

For example, as shown in FIG. 5(c), a "search term" (an example of the default text) is displayed in the text input box 1112 on the mobile phone 10. In this case, after S550, as shown in FIG. 5(d), the "search term" is no longer displayed in the text input box 1112 on the mobile phone 10.

Optionally, in some embodiments, after S560, if the second electronic device no longer displays the first input box, the first electronic device may directly switch the focus of the input device back to the first electronic device. In this way, the user can input the information on the first electronic device through the input device.

In this embodiment, specifically, after S560, the method 500 may further include the following steps: S591: The second electronic device determines that the second electronic device no longer displays the first input box, controls the second electronic device to be in a state in which the focus of the input device is lost, and sends fourth indication information to the first electronic device, where the fourth indication information indicates that the first electronic device can obtain the focus of the input device. S592: In response to the fourth indication information, the first electronic device controls the first electronic device to be in a state in which the focus of the input device is obtained.

According to the method 500, when the line of sight of the user is on the second electronic device, the focus of the input device is on the first electronic device, and the input box is displayed on the second electronic device, the first indication information may be sent to the second electronic device. Then, after receiving the first indication information, the second electronic device directly displays the focus of the input device in the first input box, or outputs the first prompt information, to prompt the operation of switching the focus of the input device. Further, the user may switch, through the input device based on the first prompt information, the focus of the input device to the input box of the second electronic device on which the line of sight of the user is located. In this way, the user can switch the focus of the input device from the first electronic device to the second electronic device in a cross-device manner by performing a simple operation. This helps improve user experience when the user switches the focus of the input device.

It should be noted that the first electronic device may also perform other steps that are not described in the foregoing method 500. For the other steps, refer to the steps performed by the tablet 20 in FIG. 8. Details are not described herein again. In addition, the second electronic device may also perform other steps that are not described in the foregoing method 500. For the other steps, refer to the steps performed by the mobile phone 10 in FIG. 8. Details are not described herein again.

FIG. 11 is a schematic flowchart of an example of a cross-device focus switching method 600 according to an embodiment of this application.

As shown in FIG. 11, the method 600 includes S610. The following describes S610 in detail.

S610: When a first condition is met, a first electronic device displays a focus of an input device on the first electronic device, or outputs third prompt information.

The first condition includes: An area at which a user gazes belongs to an area in which the first electronic device is located or no input box is displayed on a second electronic device.

The focus of the input device does not exist on the first electronic device, and the focus of the input device exists on the second electronic device, that is, the focus of the input device is on the second electronic device.

Optionally, before S610, the first electronic device may perform S620.

S620: The first electronic device determines whether the first condition is met and whether the focus of the input device is on the second electronic device.

A sequence in which the first electronic device determines that the first condition is met and that the focus of the input device is on the second electronic device is not limited in this embodiment of this application.

A process of S620 is similar to a process of S530, and only the first confirmation information shown in S532a and S533a (or S531b and S532b) needs to be replaced with second indication information. The second indication information indicates whether the input box is displayed on the second electronic device. Therefore, for descriptions of S620, refer to the related descriptions of S530. Details are not described herein again.

Optionally, when the focus of the input device is on the second electronic device, the second electronic device may further output second prompt information. For descriptions of the second prompt information, refer to the related descriptions in FIG. 10. Details are not described herein again.

It should be noted that when the first condition includes that the area at which the user gazes belongs to the area in which the first electronic device is located, regardless of whether the second electronic device displays the input box, the first electronic device can display the focus of the input device on the first electronic device or output the third prompt information. In other words, in S610, a case in which whether the input box is displayed on the second electronic device may not need to be considered, and only the area at which the user gazes needs to be considered. Certainly, in S610, it may also be considered whether the second electronic device displays the input box, and the first electronic device displays the focus of the input device on the first electronic device or outputs the third prompt information only when no input box is displayed on the second electronic device and the area at which the user gazes belongs to the area in which the first electronic device is located.

When the first condition includes that no input box is displayed on the second electronic device, regardless of whether the area at which the user gazes belongs to the area in which the first electronic device is located, the first electronic device can display the focus of the input device on the first electronic device or output the third prompt information. In other words, in S610, a case of the area at which the user gazes may not need to be considered, and only whether the input box is displayed on the second electronic device needs to be considered. Certainly, in S610, the area at which the user gazes may also be considered, and the first electronic device displays the focus of the input device on the first electronic device or outputs the third prompt information only when the area at which the user gazes belongs to the area in which the first electronic device is located, and no input box is displayed on the second electronic device.

In an example, the third prompt information prompts the user that the focus of the input device can be switched to the first electronic device. In another example, the third prompt information further prompts the user to input a first operation on the input device, so that the focus of the input device can be switched to the first electronic device.

For example, the first electronic device may display the third prompt information or play the third prompt information.

For example, the third prompt information may include at least one of the following: a third cursor, a third icon, third text information, and a third outer box. The third cursor is displayed at a location, on the first electronic device, at which the focus of the input device is to be switched, the third icon indicates a device (namely, the input device) used to switch the focus of the input device, the third text information indicates the first operation, and the third outer box surrounds an input box, on the second electronic device, in which the focus of the input device is to be switched.

For example, the third icon may be the icon 2111 shown in FIG. 6(b), and the third text information may be the text information "press Enter to input" shown in FIG. 6(b).

For another example, the third icon may be the icon 2213 shown in FIG. 7(b), and the third text information may be the text information "press Enter to input" shown in FIG. 7(b).

For descriptions of the third icon and the third text information, respectively refer to the related descriptions of the icon 2111 and the text information "press Enter to input" in FIG. 6(b); or for descriptions of the third icon and the third text information, respectively refer to the related descriptions of the icon 2213 and the text information "press Enter to input" in FIG. 7(b). Details are not described herein again.

It should be noted that, if the third prompt information includes the third icon and the third text information, the third prompt information further prompts the user to input the first operation on the input device, so that the focus of the input device can be switched to the first electronic device.

In an example, if only one input box (namely, a third input box) is displayed on the first electronic device, when the first electronic device displays the focus of the input device on the first electronic device in S610, the focus of the input device can be displayed in the third input box. When the first electronic device outputs the third prompt information in S610, the third prompt information may prompt the user that the focus of the input device can be switched to the third input box, the third prompt information may be displayed at a third target location, and a distance between the third target location and the third input box is less than or equal to a third threshold. In other words, the third prompt information is displayed near the third input box. In this way, the user can intuitively learn of the input box to which the focus of the input device is to be switched.

For example, as shown in FIG. 6(b), the third prompt information is displayed near the text information "XXX" (an example of the third target location).

In another example, if a plurality of input boxes are displayed on the first electronic device, for example, the plurality of input boxes include a third input box and a fourth input box, when the first electronic device displays the focus of the input device on the first electronic device in S610, the focus of the input device can be displayed in the fourth input box. When the first electronic device outputs the third prompt information in S610, the third prompt information may be displayed at a fourth target location, and a distance between the fourth target location and the fourth input box is less than or equal to a fourth threshold. In other words, the third prompt information is displayed near the fourth input box. In this way, the user can intuitively learn of the input box to which the focus of the input device is to be switched. If the user wants to adjust the input box, on the first electronic device, to which the focus of the input device is to be switched, the user may perform a second operation on the input device. In this way, the input device sends second switching information to the first electronic device in response to detecting the second operation, where the second switching information indicates to adjust a display location of the third prompt information from the fourth target location to the third target location, and the distance between the third target location and the third input box is less than or equal to the third threshold. The first electronic device adjusts the display location of the third prompt information from the fourth target location to the third target location in response to the second switching information.

For example, the second operation may include an operation of pressing a Tab key.

For example, as shown in FIG. 7(b), the input box displayed on the tablet 20 includes the website address input box 2211 and the search term input box 2212, and the third prompt information is first displayed near the website address input box 2211. In this case, the focus of the keyboard 30 can be switched to the website address input box 2211 of the tablet 20. If the user does not want to switch the focus of the keyboard 30 to the website address input box 2211 of the tablet 20, but wants to switch the focus of the keyboard 30 to the search term input box 2212 of the tablet 20, the user may press the Tab key on the keyboard 30, and the keyboard 30 may adjust the location of the third prompt information displayed on the tablet 20 to the search term input box 2212. In this case, the focus of the keyboard 30 can be switched to the search term input box 2212 of the tablet 20.

The fourth input box is an input box in which a focus latest input by the first electronic device is located; or the fourth input box is a 1^{st} input box on the display interface of the first electronic device.

For example, the first electronic device stores a location at which a focus input by the first electronic device each time is located. In this way, the first electronic device displays, by default, the third prompt information near the fourth input box in which a focus latest (previously) input by the first electronic device is located.

It should be understood that a 1^{st} input box on the display interface of the first electronic device may be understood as: In the input box on the display interface of the first electronic device, an input box that is closest to an upper edge and a left edge of the display interface of the first electronic device is the 1^{st} input box.

It should be noted that, in S610, if the first electronic device displays the focus of the input device, the user may operate the first electronic device or input information on the first electronic device through the input device. If the first electronic device outputs the third prompt information, the user still cannot operate the first electronic device or input the information on the first electronic device through the input device.

For example, in S610, if the first electronic device displays the focus of the input device on the first electronic device, before S610, the method 600 may further include S630 to S650; or if the first electronic device outputs the third prompt information, after S610, the method 600 may further include S630 to S650. The following describes S630 to S650 in detail.

S630: The input device sends fourth switching information to the first electronic device in response to detecting the first operation. Correspondingly, the first electronic device receives the fourth switching information from the input device.

The fourth switching information indicates that the focus of the input device is switched to the first electronic device.

For example, the first operation may be an operation of pressing an Enter key.

S640: The first electronic device controls, in response to the fourth switching information, the first electronic device to be in a state in which the focus of the input device is obtained, and sends fifth indication information to the second electronic device. Correspondingly, the second electronic device receives the fifth indication information from the first electronic device.

For example, the fifth indication information may indicate that the first electronic device is in the state in which the focus of the input device is obtained.

It should be noted that, in this embodiment of this application, an execution sequence of the step of controlling, by the first electronic device, the first electronic device to be in the state in which the focus of the input device is obtained and the step of sending, by the first electronic device, the fifth indication information to the second electronic device is not limited.

S650: The second electronic device controls, in response to the fifth indication information, the second electronic device to be in a state in which the focus of the input device is lost.

Optionally, in some embodiments, after S650, the second electronic device no longer displays the second prompt information.

Optionally, in some embodiments, after S640, the first electronic device may further output fourth prompt information. The fourth prompt information indicates that the user can input information on the first electronic device through the input device.

For example, the first electronic device may display the fourth prompt information or play the fourth prompt information.

For example, the fourth prompt information may include at least one of the following: a fourth cursor, a fourth icon, fourth text information, and a fourth outer box. The fourth cursor is displayed in the third input box, the fourth icon indicates the input device, the fourth text information indicates that the user can input information in the third input box, and the fourth outer box surrounds the third input box.

For example, the fourth icon may be the icon 2112 shown in FIG. 6(c), and the fourth text information may be the text information "inputting..." shown in FIG. 6(c).

For another example, the fourth icon may be the icon 2214 shown in FIG. 7(d), the fourth text information may be the text information "inputting..." shown in FIG. 7(d), and the fourth outer box may be the outer box 2215 shown in FIG. 7(d).

A display location of the fourth prompt information and the display location of the third prompt information are the same, and display effect of the fourth prompt information and display effect of the third prompt information are different. In this case, the display effect of the fourth prompt information and display effect of the second prompt information may be the same or may be different.

For example, a display location of the fourth cursor and a display location of the third cursor are the same, but display effect of the fourth cursor and display effect of the third cursor are different. For another example, a display location of the fourth icon and a display location of the third icon are the same, but display effect of the fourth icon and display effect of the third icon are different. For another example, displaying of the fourth outer box and displaying of the third outer box are the same, but display effect of the fourth outer box and display effect of the third outer box are different.

For descriptions of the fourth icon and the fourth text information, respectively refer to the related descriptions of the icon 2112 and the text information "inputting..." in FIG. 6(c); or for descriptions of the fourth icon, the fourth text information, and the fourth outer box, respectively refer to the related descriptions of the icon 2214, the text information "inputting... ", and the outer box 2215 in FIG. 7(d). Details are not described herein again.

Optionally, in some embodiments, before S640, if a default text is displayed in the third input box on the first electronic device, after S640, the default text is no longer displayed in the third input box on the first electronic device.

For example, as shown in FIG. 7(c), a "search term" (an example of the default text) is displayed in the search term input box 2212 on the tablet 20. In this case, after S640, as shown in FIG. 7(d), the "search term" is no longer displayed in the search term input box 2212 on the tablet 20.

Optionally, in some embodiments, after S640, the user can input the information on the first electronic device through the input device.

In this embodiment, specifically, after S640, the method 600 may further include the following steps: S660: The input device sends second input information to the first electronic device in response to obtaining the second input information of the user. S670: The first electronic device displays the second input information in response to the second input information.

According to the method 600, when the focus of the input device is on the second electronic device, and the line of sight of the user is on the first electronic device or there is no input box on the second electronic device, the first electronic device may display the focus of the input device on the first electronic device or output the third prompt information. Further, the user may switch, through the input device based on the third prompt information, the focus of the input device to the first electronic device on which the line of sight of the user is located. In this way, the user can switch the focus of the input device from the second electronic device to the first electronic device in a cross-device manner by performing a simple operation. This helps improve user experience when the user switches the focus of the input device.

It should be noted that the first electronic device may also perform other steps that are not described in the foregoing method 600. For the other steps, refer to the steps performed by the tablet 20 in FIG. 9. Details are not described herein again. The second electronic device may also perform other steps that are not described in the foregoing method 600. For the other steps, refer to the steps performed by the mobile phone 10 in FIG. 9. Details are not described herein again.

In addition, regardless of the method 500 shown in FIG. 10 or the method 600 shown in FIG. 11, when a same account is logged in to the first electronic device and the second electronic device, the first electronic device and the second electronic device may transmit information (for example, the first query information, the first confirmation information, the second query information, the second confirmation information, the first indication information, the first input information, and the second input information described above) through the cloud. When the first electronic device is connected to the second electronic device, the first electronic device and the second electronic device may transmit the information (for example, the first query information, the first confirmation information, the second query information, the second confirmation information, the first indication information, the first input information, and the second input information described above) in a manner of the connection established between the first electronic device and the second electronic device.

The focus of the input device in FIG. 10 and FIG. 11 may be understood as a location at which the information input by the user through the input device is displayed. For example, the focus of the input device is on the first electronic device, that is, the user can input the information on the first electronic device through the input device. For another example, the focus of the input device is in the input box of the second electronic device, that is, the user can input the information in the input box of the second electronic device through the input device.

The following describes, with reference to FIG. 12, a cross-device focus switching apparatus according to embodiments of this application.

FIG. 12 is a block diagram of a cross-device focus switching apparatus 700 according to an embodiment of this application.

As shown in FIG. 12, the apparatus 700 includes a processing unit 710, and the processing unit 710 is configured to perform data processing.

Optionally, the apparatus 700 may further include a transceiver unit 720. The transceiver unit 720 may communicate with the outside. The transceiver unit 720 may also be referred to as a communication interface or a communication unit.

Optionally, the apparatus 700 may further include a storage unit. The storage unit may be configured to store instructions and/or data. The processing unit 710 may read the instructions and/or the data in the storage unit.

In a possible implementation, the apparatus 700 may be configured to perform an action performed by the first electronic device in the foregoing method embodiments. In this case, the apparatus 700 may be the first electronic device or a component that may be configured in the first electronic device. The processing unit 710 is configured to perform a processing related operation on a first electronic device side in the foregoing method embodiments. The transceiver unit 720 is configured to perform receiving and sending related operations on the first electronic device side in the foregoing method embodiments.

In another possible implementation, the apparatus 700 may be configured to perform an action performed by the second electronic device in the foregoing method embodiments. In this case, the apparatus 700 may be the second electronic device or a component that may be configured in the second electronic device. The processing unit 710 is configured to perform a processing related operation on a second electronic device side in the foregoing method embodiments. The transceiver unit 720 is configured to perform receiving and sending related operations on the second electronic device side in the foregoing method embodiments.

In still another possible implementation, the apparatus 700 may be configured to perform an action performed by the input device in the foregoing method embodiments. In this case, the apparatus 700 may be the input device or a component that may be configured in the input device. The processing unit 710 is configured to perform a processing related operation on an input device side in the foregoing method embodiments. The transceiver unit 720 is configured to perform receiving and sending related operations on the input device side in the foregoing method embodiments.

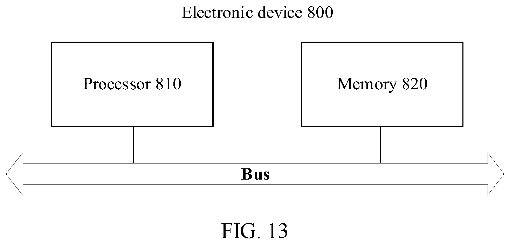

The following describes the electronic device provided in embodiments of this application with reference to FIG. 13.

FIG. 13 is a diagram of a structure of an electronic device 800 according to an embodiment of this application.

As shown in FIG. 13, the electronic device 800 includes one or more processors 810 and one or more memories 820. The one or more memories 820 store one or more computer programs, and the one or more computer programs include instructions.

In an example, the electronic device 800 may be the mobile phone 10, the tablet 20, or the keyboard 30 shown in FIG. 3 to FIG. 9. When the instructions are run by the one or more processors 810, the electronic device 800 is enabled to perform the steps performed by the mobile phone 10, the tablet 20, or the keyboard 30.

In another example, the electronic device 800 may be the first electronic device, the second electronic device, or the input device in FIG. 10 and FIG. 11. When the instructions are run by the one or more processors 810, the electronic device 800 is enabled to perform the steps performed by the first electronic device, the second electronic device, or the input device.

An embodiment of this application provides a system. The system includes a first electronic device, a second electronic device, and an input device. The system is configured to perform the technical solutions in the foregoing embodiments. An implementation principle and technical effect of the system are similar to those of the foregoing method related embodiments. Details are not described herein again.

An embodiment of this application provides a computer program product. When the computer program product is run on a first electronic device, the first electronic device is enabled to perform the technical solutions in the foregoing embodiments. An implementation principle and technical effect of the computer program product are similar to those of the foregoing method related embodiments. Details are not described herein again.

An embodiment of this application provides a computer program product. When the computer program product is run on a second electronic device, the second electronic device is enabled to perform the technical solutions in the foregoing embodiments. An implementation principle and technical effect of the computer program product are similar to those of the foregoing method related embodiments. Details are not described herein again.

An embodiment of this application provides a computer program product. When the computer program product is run on an input device, the input device is enabled to perform the technical solutions in the foregoing embodiments. An implementation principle and technical effect of the computer program product are similar to those of the foregoing method related embodiments. Details are not described herein again.

An embodiment of this application provides a computer-readable storage medium. The computer-readable storage medium includes instructions; and when the instructions are run on a first electronic device, the first electronic device is enabled to perform the technical solutions in the foregoing embodiments. An implementation principle and technical effect of the computer-readable storage medium are similar. Details are not described herein again.

An embodiment of this application provides a computer-readable storage medium. The computer-readable storage medium includes instructions; and when the instructions are run on a second electronic device, the second electronic device is enabled to perform the technical solutions in the foregoing embodiments. An implementation principle and technical effect of the computer-readable storage medium are similar. Details are not described herein again.

An embodiment of this application provides a computer-readable storage medium. The computer-readable storage medium includes instructions; and when the instructions are run on an input device, the input device is enabled to perform the technical solutions in the foregoing embodiments. An implementation principle and technical effect of the computer-readable storage medium are similar. Details are not described herein again.

An embodiment of this application provides a chip. The chip is configured to execute instructions; and when the chip runs, the technical solutions of the first electronic device, the second electronic device, or the input device in the foregoing embodiments are performed. An implementation principle and technical effect of the chip are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises an input device, a first electronic device, and a second electronic device, the input device is connected to the first electronic device, a focus of the input device is on the first electronic device, the first electronic device is connected to the second electronic device, and/or a same account is logged in to the first electronic device and the second electronic device;
the first electronic device is configured to: when an area at which a user gazes belongs to an area in which the second electronic device is located, and a first input box is displayed on the second electronic device, send first indication information to the second electronic device; and
the second electronic device is configured to: after receiving the first indication information, display the focus of the input device in the first input box, or output first prompt information, wherein the first prompt information indicates that the user is capable of switching the focus of the input device to the first input box.

2. The system according to claim 1, wherein the first electronic device is further configured to determine, in the following manner, that the area at which the user gazes belongs to the area in which the second electronic device is located:
obtaining an image of the user;
determining a line of sight of the user based on the image of the user; and
when there is an intersection point between the line of sight of the user and an extension surface, along a first direction, of the first electronic device, and the second electronic device is located in the first direction of the first electronic device, determining that the area at which the user gazes belongs to the area in which the second electronic device is located.

3. The system according to claim 1 or 2, wherein the first electronic device is further configured to determine, in the following manner, that the first input box is displayed on the second electronic device:
receiving first confirmation information from the second electronic device, wherein the first confirmation information indicates that the first input box is displayed on the second electronic device; and
determining, based on the first confirmation information, that the first input box is displayed on the second electronic device.

4. The system according to any one of claims 1 to 3, wherein the first prompt information is displayed at a first target location, and a distance between the first target location and the first input box is less than or equal to a first threshold.

5. The system according to any one of claims 1 to 3, wherein when a second input box is further displayed on the second electronic device, the first prompt information is displayed at a second target location, and a distance between the second target location and the second input box is less than or equal to a second threshold;
the first electronic device is further configured to send first switching information to the second electronic device; and
the second electronic device is further configured to: after receiving the first switching information, adjust a display location of the first prompt information from the second target location to a first target location, wherein a distance between the first target location and the first input box is less than or equal to a first threshold.

6. The system according to any one of claims 1 to 5, wherein
the second electronic device is further configured to: after the focus of the input device is switched to the first input box, display first input information in the first input box, wherein the first input information is information input by the user through the input device.

7. The system according to any one of claims 1 to 6, wherein
the second electronic device is further configured to: after the focus of the input device is switched to the first input box, display second prompt information, wherein the second prompt information indicates that the user is capable of inputting information on the second electronic device through the input device.

8. The system according to any one of claims 1 to 7, wherein a display location of the second prompt information and the display location of the first prompt information are the same, and display effect of the second prompt information and display effect of the first prompt information are different.

9. A cross-device focus switching method, wherein the method is applied to a first electronic device, the first electronic device is connected to an input device, the first electronic device is connected to a second electronic device, and/or a same account is logged in to the first electronic device and the second electronic device; a focus of the input device is on the second electronic device; and the method comprises:
when a first condition is met, displaying the focus of the input device on the first electronic device, or outputting third prompt information, wherein the third prompt information prompts the user that the focus of the input device is capable of being switched to the first electronic device; and
the first condition comprises: no input box is displayed on the second electronic device; or an area at which the user gazes belongs to an area in which the first electronic device is located, and an input box is displayed on the second electronic device.

10. The method according to claim 9, wherein the first electronic device is further configured to determine, in the following manner, that the area at which the user gazes belongs to the area in which the first electronic device is located:
obtaining an image of the user, and determining a line of sight of the user; and
when there is an intersection point between the line of sight of the user and the first electronic device, determining that the area at which the user gazes belongs to the area in which the first electronic device is located.

11. The method according to claim 9 or 10, wherein whether the input box is displayed on the second electronic device is determined in the following manner:
receiving second indication information from the second electronic device, wherein the second indication information indicates whether the input box is displayed on the second electronic device; and
determining, based on the second indication information, whether the input box is displayed on the second electronic device.

12. The method according to any one of claims 9 to 11, wherein a third input box is displayed on the first electronic device, and the focus of the input device is displayed in the third input box, or the third prompt information prompts the user that the focus of the input device is capable of being switched to the third input box.

13. The method according to claim 12, wherein the third prompt information is displayed at a third target location, and a distance between the third target location and the third input box is less than or equal to a third threshold.

14. The method according to claim 12, wherein when a fourth input box is further displayed on the first electronic device, the third prompt information is displayed at a fourth target location, and a distance between the fourth target location and the fourth input box is less than or equal to a fourth threshold; and the method further comprises:
receiving second switching information from the input device; and
after the second switching information is received, adjusting a display location of the third prompt information from the fourth target location to a third target location, wherein a distance between the third target location and the third input box is less than or equal to a third threshold.

15. The method according to any one of claims 12 to 14, wherein the method further comprises:
after the focus of the input device is switched to the first electronic device, displaying second input information in the third input box, wherein the second input information is information input by the user through the input device.

16. The method according to any one of claims 9 to 15, wherein the method further comprises:
after the focus of the input device is switched to the first electronic device, displaying fourth prompt information, wherein the fourth prompt information indicates that the user is capable of inputting information on the first electronic device through the input device.

17. The method according to claim 16, wherein a display location of the fourth prompt information and the display location of the third prompt information are the same, and display effect of the fourth prompt information and display effect of the third prompt information are different.

18. An electronic device, comprising:
one or more processors;
one or more memories; and
one or more computer programs, wherein the one or more computer programs are stored in the one or more memories, and the one or more computer programs comprise instructions; and when the instructions are executed by the one or more processors, the electronic device is enabled to perform the method according to any one of claims 9 to 17.

19. A computer-readable storage medium, comprising computer instructions, wherein when the computer instructions are run on an electronic device, the electronic device is enabled to perform the method according to any one of claims 9 to 17.

20. A chip, comprising at least one processor and an interface circuit, wherein the interface circuit is configured to provide program instructions or data for the at least one processor, and the at least one processor is configured to execute the program instructions, to implement the method according to any one of claims 9 to 17.
